# EUROPEAN PATENT APPLICATION

(11) **EP 4 307 821 A1**
(43) Date of publication of application: **17.01.2024**
(21) Application number: 22783904.0
(22) Date of filing: 28.03.2022
(51) Int. Cl.: H04W 74/08

(54) **COMMUNICATION PARAMETER INDICATION METHOD AND APPARATUS**

(30) Priority: 06.04.2021 CN 202110369325
(71) Applicant: Huawei Technologies Co., Ltd., Longgang Shenzhen, Guangdong 518129 (CN)
(72) Inventor: CHEN, Ying, Shenzhen, Guangdong 518129 (CN); QIAO, Yunfei, Shenzhen, Guangdong 518129 (CN); ZHOU, Jianwei, Shenzhen, Guangdong 518129 (CN); WANG, Xiaolu, Shenzhen, Guangdong 518129 (CN); WANG, Jun, Shenzhen, Guangdong 518129 (CN)
(74) Representative: Isarpatent
(86) International application number: PCT/CN2022/083425
(87) International publication number: WO 2022/213837

(57) **Abstract**

This application provides a communication parameter indication method and apparatus, to resolve a problem that terrestrial network related communication parameters do not adapt to non-terrestrial network communication. The method includes: obtaining first information, where the first information requests a first parameter of a terminal device, and the first parameter includes at least one of the following: location information of the terminal device and a parameter related to a timing advance TA, where the parameter related to the TA is determined based on a round-trip transmission delay between a first reference point and the terminal device, or the parameter related to the TA is determined based on a round-trip transmission delay between a network device and the terminal device; sending second information based on the first information, where the second information indicates the first parameter; and obtaining third information, where the third information indicates a timing offset, the timing offset is for determining a scheduling delay degree of sending information by the terminal device, and the timing offset is related to at least one of a communication parameter corresponding to a cell in which the terminal device is located and the first parameter.

## Description

### CROSS-REFERENCE TO RELATED APPLICATIONS

This application claims priority to Chinese Patent Application No. 202110369325.7, filed with the China National Intellectual Property Administration on April 6, 2021 and entitled "COMMUNICATION PARAMETER INDICATION METHOD AND APPARATUS", which is incorporated herein by reference in its entirety.

### TECHNICAL FIELD

Embodiments of this application relate to the field of communication technologies, and in particular, to a communication parameter indication method and apparatus.

### BACKGROUND

Base stations in conventional terrestrial networks cannot be deployed in the sea, desert, and air, and seamless coverage cannot be provided for a terminal device. A non-terrestrial network (non-terrestrial network, NTN) is introduced into a fifth generation (5th generation, 5G) system, and a base station or some base station functions are deployed on a high-altitude platform or a satellite, to provide seamless coverage for a terminal device.

A communication distance of non-terrestrial network communication is long, and some communication parameter configurations in a conventional terrestrial network cannot meet a latency requirement in the non-terrestrial network. For example, a larger timing advance is required for sending uplink information by a terminal device, but based on a feedback time specified for the conventional terrestrial network, the terminal device cannot send feedback information on time.

### SUMMARY

This application provides a communication parameter indication method and apparatus, to flexibly indicate a beam-level communication parameter and a user-level communication parameter to a terminal device.

According to a first aspect, this application provides a communication parameter indication method, including: obtaining first information, where the first information requests a first parameter of a terminal device, and the first parameter includes at least one of the following: location information of the terminal device and a parameter related to a timing advance TA, where the parameter related to the TA is determined based on a round-trip transmission delay between a first reference point and the terminal device, or the parameter related to the TA is determined based on a round-trip transmission delay between a network device and the terminal device; sending second information based on the first information, where the second information indicates the first parameter; and obtaining third information, where the third information indicates a timing offset, the timing offset is for determining a scheduling delay degree of sending information by the terminal device, and the timing offset is related to at least one of a communication parameter corresponding to a cell in which the terminal device is located and the first parameter.

In a satellite communication scenario, updating a communication parameter by a terminal device helps reduce a scheduling delay. In this application, a communication parameter update manner and content reported by the terminal device are indicated, so that various communication parameter update manners can be compatible, including beam-level, cell-level, and user-level communication parameter updates.

In an optional implementation, the method further includes: obtaining the communication parameter corresponding to the cell in which the terminal device is located, where the communication parameter includes at least one of the following: a reference timing offset at a cell level, and a reference timing offset at each beam level included in the cell.

According to a second aspect, this application provides a communication parameter indication method, including: sending first information, where the first information requests a first parameter of a terminal device, and the first parameter includes at least one of the following: location information of the terminal device and a parameter related to a timing advance TA, where the parameter related to the TA is determined based on a round-trip transmission delay between a reference point and the terminal device, or the parameter related to the TA is determined based on a round-trip transmission delay between a network device and the terminal device; obtaining second information, where the second information indicates the first parameter; and sending third information, where the third information indicates a timing offset, the timing offset is for determining a scheduling delay degree of sending information by the terminal device, and the timing offset is related to at least one of a communication parameter corresponding to a cell in which the terminal device is located and the first parameter.

In a satellite communication scenario, updating a communication parameter by a terminal device helps reduce a scheduling delay. In this application, a communication parameter update manner and content reported by the terminal device are indicated by a network side, so that various communication parameter update manners can be compatible, including beam-level, cell-level, and user-level communication parameter updates.

In an optional implementation, the method further includes:
sending the communication parameter corresponding to the cell in which the terminal device is located, where the communication parameter includes at least one of the following: a reference timing offset at a cell level, and a reference timing offset at each beam level included in the cell.

According to a third aspect, this application provides a communication parameter indication apparatus, including: a communication module, configured to obtain first information, where the first information requests a first parameter of a terminal device, and the first parameter includes at least one of the following: location information of the terminal device and a parameter related to a timing advance TA, where the parameter related to the TA is determined based on a round-trip transmission delay between a first reference point and the terminal device, or the parameter related to the TA is determined based on a round-trip transmission delay between a network device and the terminal device; a processing module, configured to generate second information based on first information, where the second information indicates the first parameter; the communication module being further configured to send the second information; and the communication module being further configured to obtain third information, where the third information indicates a timing offset, the timing offset is for determining a scheduling delay degree of sending information by the terminal device, and the timing offset is related to at least one of a communication parameter corresponding to a cell in which the terminal device is located and the first parameter.

In a satellite communication scenario, updating a communication parameter by a terminal device helps reduce a scheduling delay. In this application, a communication parameter update manner and content reported by the terminal device are indicated, so that various communication parameter update manners can be compatible, including beam-level, cell-level, and user-level communication parameter updates.

In an optional implementation, the communication module is further configured to: obtain the communication parameter corresponding to the cell in which the terminal device is located, where the communication parameter includes at least one of the following: a reference timing offset at a cell level, and a reference timing offset at each beam level included in the cell.

According to a fourth aspect, this application provides a communication parameter indication apparatus, including: a processing module, configured to generate first information, where the first information requests a first parameter of a terminal device, and the first parameter includes at least one of the following: location information of the terminal device and a parameter related to a timing advance TA, where the parameter related to the TA is determined based on a round-trip transmission delay between a reference point and the terminal device, or the parameter related to the TA is determined based on a round-trip transmission delay between a network device and the terminal device; a communication module, configured to send the first information; the communication module being further configured to obtain second information, where the second information indicates the first parameter; and the communication module being further configured to send third information, where the third information indicates a timing offset, the timing offset is for determining a scheduling delay degree of sending information by the terminal device, and the timing offset is related to at least one of a communication parameter corresponding to a cell in which the terminal device is located and the first parameter.

In a satellite communication scenario, updating a communication parameter by a terminal device helps reduce a scheduling delay. In this application, a communication parameter update manner and content reported by the terminal device are indicated, so that various communication parameter update manners can be compatible, including beam-level, cell-level, and user-level communication parameter updates.

In an optional implementation, the communication module is further configured to: send the communication parameter corresponding to the cell in which the terminal device is located, where the communication parameter includes at least one of the following: a reference timing offset at a cell level, and a reference timing offset at each beam level included in the cell.

In any optional implementation of the first aspect to the fourth aspect, when a value of the first information is a first value, the timing offset is a reference timing offset at a beam level corresponding to the terminal device; or when a value of the first information is not a first value, the timing offset is determined based on the first parameter. A setting or update manner of the communication parameter is indicated by using different values of the first information, for example, whether the communication parameter is set or updated to a cell level or a user level. This indication manner is relatively simple, and signaling overheads can be reduced.

In any optional implementation of the first aspect to the fourth aspect, the cell includes one or more beam levels, and the beam level corresponding to the terminal device is determined based on the first parameter. The beam levels are divided for the cell, and the beam level suitable for the terminal device is determined based on the first parameter related to the terminal device. This helps indicate a targeted communication parameter to the terminal device, and is more flexible.

In any optional implementation of the first aspect to the fourth aspect, when the value of the first information is the first value or a second value, the first parameter includes the location information of the terminal device; or when the value of the first information is a third value, the first parameter includes the parameter related to the TA. Content reported by the terminal device is indicated by using different values of the first information. This indication manner is relatively simple, and signaling overheads can be reduced.

In any optional implementation of the first aspect to the fourth aspect, the second information includes at least one of the following parameters:
a differential value between a location of the terminal device and a location of a second reference point; and a differential value between the TA and a common timing advance TA_common, where the TA_common is determined based on a round-trip transmission delay between the network device and the first reference point. The terminal device reports content in a differential value manner, so that signaling overheads can be reduced.

According to a fifth aspect, this application provides a communication parameter indication method, including: sending fourth information based on a first beam, where the fourth information requests to access a network device; and obtaining fifth information, where the fifth information indicates a reference timing offset at a beam level corresponding to the first beam, and the reference timing offset is for determine a scheduling delay degree of sending information by a terminal device.

In a satellite communication scenario, updating a communication parameter by a terminal device helps reduce a scheduling delay. In this application, a beam used by the terminal device to access a network is introduced to update the communication parameter to a beam level, and a communication parameter update manner, that is, the beam level, is indicated by a network side to the terminal device. This is relatively flexible.

In an optional implementation, before the obtaining fifth information, the method further includes: obtaining a delay start duration of a reference random access RAR window at the beam level corresponding to the first beam, where the delayed start duration of the reference RAR window is for determining a delay degree of opening an RAR window by the terminal device. A delay start duration of an RAR window is set to a beam level. Compared with a delay start duration of an RAR window at a cell level, for example, a conventional delayed start duration of an RAR window that is set based on a minimum round-trip transmission delay of a cell, complexity of monitoring a message 2 around a terminal can be reduced.

In an optional implementation, a cell in which the terminal device is located includes one or more beams, each beam corresponds to one beam level, and the method further includes: obtaining a correspondence between the beams included in the cell in which the terminal device is located and beam levels, to determine the beam level corresponding to the first beam.

In an optional implementation, a communication parameter corresponding to the cell in which the terminal device is located is obtained, where the communication parameter includes at least one of the following: a reference timing offset at a cell level, a reference timing offset at each beam level included in the cell, a delay start duration of a reference random access RAR window at a cell level, and a delay start duration of a reference random access RAR window at each beam level included in the cell.

In an optional implementation, before the sending fourth information based on a first beam, the method further includes:
obtaining a synchronization signal from the network device, and determining the first beam, where a synchronization signal obtained by the terminal device based on the first beam has best signal quality. A beam corresponding to the best received synchronization signal quality is selected for access, ensuring communication reliability.

According to a sixth aspect, this application provides a communication parameter indication method, including: obtaining fourth information sent by a terminal device based on a first beam, where the fourth information requests to access a network device; and sending fifth information, where the fifth information indicates a reference timing offset at a beam level corresponding to the first beam, and the reference timing offset is for determining a scheduling delay degree of sending information by the terminal device.

In a satellite communication scenario, updating a communication parameter by a terminal device helps reduce a scheduling delay. In this application, a beam used by the terminal device to access a network is introduced to update the communication parameter to a beam level, and a communication parameter update manner, that is, the beam level, is indicated by a network side to the terminal device. This is relatively flexible.

In an optional implementation, before the sending fifth information, the method further includes: sending a delay start duration of a reference random access RAR window at the beam level corresponding to the first beam, where the delayed start duration of the reference RAR window is for determining a delay degree of opening an RAR window by the terminal device. A delay start duration of an RAR window is set to a beam level. Compared with a delay start duration of an RAR window at a cell level, for example, a conventional delayed start duration of an RAR window that is set based on a minimum round-trip transmission delay of a cell, complexity of monitoring a message 2 around a terminal can be reduced.

In an optional implementation, a cell in which the terminal device is located includes one or more beams, each beam corresponds to one beam level, and the method further includes: sending a correspondence between the beams included in the cell in which the terminal device is located and beam levels, to determine the beam level corresponding to the first beam.

In an optional implementation, a communication parameter corresponding to the cell in which the terminal device is located is sent, where the communication parameter includes at least one of the following: a reference timing offset at a cell level, a reference timing offset at each beam level included in the cell, a delay start duration of a reference random access RAR window at a cell level, and a delay start duration of a reference random access RAR window at each beam level included in the cell.

In an optional implementation, before the obtaining fourth information sent by a terminal device based on a first beam, the method further includes: sending a synchronization signal, where the synchronization signal is used by the terminal device to determine the first beam, and a synchronization signal obtained by the terminal device based on the first beam has best signal quality. A beam corresponding to the best received synchronization signal quality is selected for access, ensuring communication reliability.

According to a seventh aspect, this application provides a communication parameter indication apparatus, including: a processing module, configured to generate fourth information, where the fourth information requests to access a network device; a communication module, configured to send the fourth information based on a first beam; and the communication module being further configured to obtain fifth information, where the fifth information indicates a reference timing offset at a beam level corresponding to the first beam, and the reference timing offset is for determining a scheduling delay degree of sending information by a terminal device.

In a satellite communication scenario, updating a communication parameter by a terminal device helps reduce a scheduling delay. In this application, a beam used by the terminal device to access a network is introduced to update the communication parameter to a beam level, and a communication parameter update manner, that is, the beam level, is indicated by a network side to the terminal device. This is relatively flexible.

In an optional implementation, the communication module is further configured to: before obtaining the fifth information, obtain a delay start duration of a reference random access RAR window at the beam level corresponding to the first beam, where the delayed start duration of the reference RAR window is for determining a delay degree of opening an RAR window by the terminal device. A delay start duration of an RAR window is set to a beam level. Compared with a delay start duration of an RAR window at a cell level, for example, a conventional delayed start duration of an RAR window that is set based on a minimum round-trip transmission delay of a cell, complexity of monitoring a message 2 around a terminal can be reduced.

In an optional implementation, a cell in which the terminal device is located includes one or more beams, each beam corresponds to one beam level, and the communication module is further configured to: obtain a correspondence between the beams included in the cell in which the terminal device is located and beam levels, to determine the beam level corresponding to the first beam.

In an optional implementation, the communication module is further configured to obtain a communication parameter corresponding to the cell in which the terminal device is located, where the communication parameter includes at least one of the following: a reference timing offset at a cell level, a reference timing offset at each beam level included in the cell, a delay start duration of a reference random access RAR window at a cell level, and a delay start duration of a reference random access RAR window at each beam level included in the cell.

In an optional implementation, before sending the fourth information based on the first beam, the communication module is further configured to: obtain a synchronization signal from the network device, and determine the first beam, where a synchronization signal obtained by the terminal device based on the first beam has best signal quality. A beam corresponding to the best received synchronization signal quality is selected for access, ensuring communication reliability.

According to an eighth aspect, this application provides a communication parameter indication apparatus, including: a communication module, configured to obtain fourth information sent by a terminal device based on a first beam, where the fourth information requests to access a network device; a processing module, configured to generate fifth information, where the fifth information indicates a reference timing offset at a beam level corresponding to the first beam, and the reference timing offset is for determining a scheduling delay degree of sending information by the terminal device; and the communication module being further configured to send the fifth information.

In a satellite communication scenario, updating a communication parameter by a terminal device helps reduce a scheduling delay. In this application, a beam used by the terminal device to access a network is introduced to update the communication parameter to a beam level, and a communication parameter update manner, that is, the beam level, is indicated by a network side to the terminal device. This is relatively flexible.

In an optional implementation, the communication module is further configured to: before sending the fifth information, send a delay start duration of a reference random access RAR window at the beam level corresponding to the first beam, where the delayed start duration of the reference RAR window is for determining a delay degree of opening an RAR window by the terminal device. A delay start duration of an RAR window is set to a beam level. Compared with a delay start duration of an RAR window at a cell level, for example, a conventional delayed start duration of an RAR window that is set based on a minimum round-trip transmission delay of a cell, complexity of monitoring a message 2 around a terminal can be reduced.

In an optional implementation, a cell in which the terminal device is located includes one or more beams, each beam corresponds to one beam level, and the communication module is further configured to send a correspondence between the beams included in the cell in which the terminal device is located and beam levels, to determine the beam level corresponding to the first beam.

In an optional implementation, the communication module is further configured to send a communication parameter corresponding to the cell in which the terminal device is located, where the communication parameter includes at least one of the following: a reference timing offset at a cell level, a reference timing offset at each beam level included in the cell, a delay start duration of a reference random access RAR window at a cell level, and a delay start duration of a reference random access RAR window at each beam level included in the cell.

In an optional implementation, the communication module is further configured to: before obtaining the fourth information sent by the terminal device based on the first beam, send a synchronization signal, where the synchronization signal is used by the terminal device to determine the first beam, and a synchronization signal obtained by the terminal device based on the first beam has best signal quality. A beam corresponding to the best received synchronization signal quality is selected for access, ensuring communication reliability.

According to a ninth aspect, this application provides a communication apparatus, including a logic circuit and an input/output interface, where
the input/output interface is configured to input first information, where the first information requests a first parameter of a terminal device, and the first parameter includes at least one of the following: location information of the terminal device and a parameter related to a timing advance TA, where the parameter related to the TA is determined based on a round-trip transmission delay between a first reference point and the terminal device, or the parameter related to the TA is determined based on a round-trip transmission delay between a network device and the terminal device;
the logic circuit is configured to generate second information based on the first information, where the second information indicates the first parameter;
the input/output interface is further configured to output the second information; and
the input/output interface is further configured to input third information, where the third information indicates a timing offset, the timing offset is for determining a scheduling delay degree of sending information by the terminal device, and the timing offset is related to at least one of a communication parameter corresponding to a cell in which the terminal device is located and the first parameter.

According to a tenth aspect, this application provides a communication apparatus, including: a logic circuit and an input/output interface, where
the logic circuit is configured to generate first information, where the first information requests a first parameter of a terminal device, and the first parameter includes at least one of the following: location information of the terminal device and a parameter related to a timing advance TA, where the parameter related to the TA is determined based on a round-trip transmission delay between a reference point and the terminal device, or the parameter related to the TA is determined based on a round-trip transmission delay between a network device and the terminal device;
the input/output interface is configured to output the first information;
the input/output interface is further configured to input second information, where the second information indicates the first parameter; and
the input/output interface is further configured to output third information, where the third information indicates a timing offset, the timing offset is for determining a scheduling delay degree of sending information by the terminal device, and the timing offset is related to at least one of a communication parameter corresponding to a cell in which the terminal device is located and the first parameter.

According to an eleventh aspect, this application provides a communication apparatus, including a logic circuit and an input/output interface, where the logic circuit is configured to generate fourth information, where the fourth information requests to access a network device; the input/output interface is configured to output the fourth information based on a first beam; and the input/output interface is further configured to input fifth information, where the fifth information indicate a reference timing offset at a beam level corresponding to the first beam, and the reference timing offset is for determining a scheduling delay degree of sending information by a terminal device.

According to a twelfth aspect, this application provides a communication apparatus, including a logic circuit and an input/output interface, where the input/output interface is configured to obtain fourth information sent by a terminal device based on a first beam, where the fourth information requests to access a network device; the logic circuit is configured to generate fifth information, where the fifth information indicates a reference timing offset at a beam level corresponding to the first beam, and the reference timing offset is for determining a scheduling delay degree of sending information by the terminal device; and the input/output interface is further configured to send the fifth information.

According to a thirteenth aspect, this application provides a communication apparatus, including a processor, where the processor is coupled to a memory, the memory is configured to store a computer program or instructions, and the processor is configured to execute the computer program or the instructions, to perform the implementation method according to the first aspect, the second aspect, the fifth aspect, or the sixth aspect. The memory may be located inside or outside the apparatus. There is one or more processors.

According to a fourteenth aspect, this application provides a communication apparatus, including: a processor and an interface circuit, where the interface circuit is configured to communicate with another apparatus, and the processor is configured to implement the implementation method according to the first aspect, the second aspect, the fifth aspect, or the sixth aspect.

According to a fifteenth aspect, this application provides a communication system, including: a terminal device configured to perform the implementation method according to the first aspect or the fifth aspect, and a network device configured to perform the implementation method according to the second aspect or the sixth aspect.

According to a sixteenth aspect, this application further provides a chip system, including: a processor, configured to perform the implementation method according to the first aspect, the second aspect, the fifth aspect, or the sixth aspect.

According to a seventeenth aspect, this application further provides a computer program product, including computer-executable instructions. When the computer-executable instructions are run on a computer, the implementation method according to the first aspect, the second aspect, the fifth aspect, or the sixth aspect is performed.

According to an eighteenth aspect, this application further provides a computer-readable storage medium, storing a computer program or instructions, where when the instructions are run on a computer, the implementation method according to the first aspect, the second aspect, the fifth aspect, or the sixth aspect is implemented.

For technical effects that can be achieved in the seventh aspect to the eighteenth aspect, refer to technical effects that can be brought by corresponding technical solutions in the first aspect, the second aspect, the fifth aspect, or the sixth aspect. Details are not described herein again.

### BRIEF DESCRIPTION OF DRAWINGS

FIG. 1 is a schematic diagram of a synchronization signal covering beams;
FIG. 2 is a schematic diagram of timing advance adjustment of uplink information;
FIG. 3 is a schematic diagram of sending uplink data by a terminal device when no timing offset is introduced;
FIG. 4 is a schematic diagram of sending uplink data by a terminal device when a timing offset is introduced;
FIG. 5 is a schematic diagram of starting an RAR window by a terminal device when a delay start duration of the RAR window is introduced;
FIG. 6 is a schematic architectural diagram of a communication system according to an embodiment of this application;
FIG. 7 is a schematic architectural diagram of another communication system according to an embodiment of this application;
FIG. 8 is a first flowchart of a communication parameter indication method according to an embodiment of this application;
FIG. 9 is a first schematic diagram of a random access procedure according to an embodiment of this application;
FIG. 10 is a schematic diagram of a structure of RAR signaling according to an embodiment of this application;
FIG. 11 is a second schematic diagram of a random access procedure according to an embodiment of this application;
FIG. 12 is a third schematic diagram of a random access procedure according to an embodiment of this application;
FIG. 13 is a second flowchart of a communication parameter indication method according to an embodiment of this application;
FIG. 14 is a third flowchart of a communication parameter indication method according to an embodiment of this application;
FIG. 15 is a schematic diagram of a structure of a communication parameter indication apparatus according to an embodiment of this application;
FIG. 16 is a first schematic diagram of a structure of a communication apparatus according to an embodiment of this application; and
FIG. 17 is a second schematic diagram of a structure of a communication apparatus according to an embodiment of this application.

### DESCRIPTION OF EMBODIMENTS

Embodiments of this application may be applied to a non-terrestrial network (non-terrestrial network, NTN), a fourth generation (4th generation, 4G) network, a 5G network, a future communication network, or the like.

### (1) Random access

A random access (random access, RA) process is an information exchange mechanism (or process) used by a terminal device that does not access a network to establish a connection to a network in a communication system with access control. Because the random access process is carried by a random access channel (random access channel, RACH), the RA and the RACH are usually used together to indicate random access in protocols and spoken language. The random access is divided into contention-based random access and non-contention-based random access. The contention-based random access usually includes four steps, each of which corresponds to a message: A message 1, a message 2, a message 3, and a message 4 are included, which respectively carry different signaling or information. The non-contention-based random access includes only the first two steps. In addition, to reduce an access time of the four-step contention-based random access, two-step random access is further provided. The two-step random access includes a message A and a message B. The message A includes a preamble and first data information (similar to the message 1 and the message 3 in the four-step random access), and the message B includes contention resolution and uplink scheduling. (similar to the message 2 and the message 4 in the four-step random access). Message 1 (message 1, Msg1): The message 1 is a random access preamble (preamble or sequence) and is carried on a physical random access channel (physical random access channel, PRACH). Generally, the terminal device uses the message 1 to send a connection request, a handover request, a synchronization request, or a scheduling request to a network device.

Message 2 (message 2, Msg2): The message 2 is also referred to as a random access response (RAR) message. The message 2 is a response from the network device to the received message 1, and one message 2 may response to a plurality of Msgls. For a single random access preamble, there is a specific random access response message in a MAC. The network device usually encapsulates responses for all random access preambles detected on a random access opportunity together to form an Msg2. That is, after sending the random access preamble, the terminal device searches a corresponding message 2 for a random access response message corresponding to the random access preamble sent by the terminal device, and ignores a response message for another random access preamble. If the network side receives the message 1, the network side encapsulates at least one piece of the following information into a random access response (random access response, RAR) for sending: an index (random access preamble identity, RAPID) of the message 1, uplink grant (uplink grant) scheduling, a timing advance (timing advance), a temporary cell radio network temporary identifier (temporary cell radio network temporary identity, TC-RNTI), and the like. The network side may respond to a plurality of Msgls in a same Msg2, that is, a plurality of RARs are included.

Message 3 (message 3, Msg3): The message 3 is also referred to as first uplink scheduling transmission, which is transmission scheduled by the UL grant in the message 2, or retransmission scheduled by DCI scrambled by the TC-RNTI. Content transmitted by the Msg3 is a high-layer message, for example, a connection establishment request message (which may be specifically identification information of a user who initiates a connection request). The message is used for contention resolution. If a plurality of different devices use a same Msg1 to perform random access, whether a conflict exists may be jointly determined by using the Msg3 and the Msg4. Definition of the Msg3 in protocols is as follows: Message transmitted on UL-SCH (uplink shared channel) containing a C-RNTI MAC (medium access control) CE (control element) or CCCH (common control channel) SDU (service data unit), submitted from upper layer and associated with the UE Contention Resolution Identity, as part of a Random Access procedure. Transmission of the message 3 includes retransmission and power control (that is, a UL grant for scheduling initial transmission or retransmission includes power control information).

Message 4 (message 4, Msg4): The message 4 is used for contention resolution. Usually, the message 4 includes the CCCH SDU carried in the message 3. If a device detects, in the message 4, the CCCH SDU sent by the device, the device considers that contention-based random access succeeds, and continues to perform a subsequent communication process. The message 4 includes a retransmission process, that is, a corresponding physical uplink control channel (physical uplink control channel, PUCCH) is used to transmit feedback information (whether the message 4 is successfully detected), and power control is performed for sending the feedback information by the device on the PUCCH.

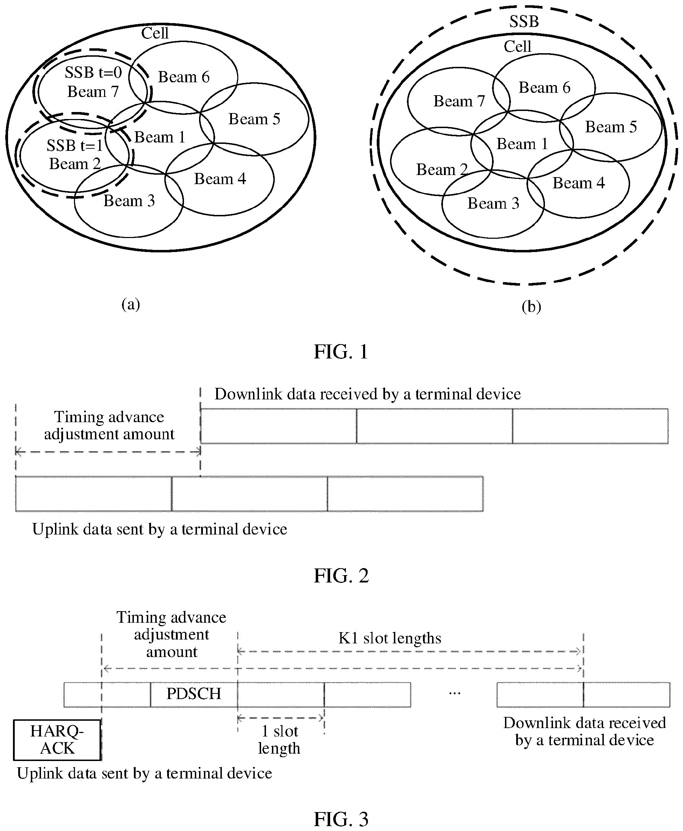

In addition, regardless of the four-step random access or the two-step random access, before access, that is, before the message 1 or the message A, the terminal device needs to scan a synchronization signal broadcast by the network device, to perform downlink synchronization to obtain related information such as a frame boundary. The synchronization signal is also referred to as a synchronization/physical broadcast channel block (synchronization signal/physical broadcast channel block, SS/PBCH block or SSB for short). Coverage of the synchronization signal SSB includes two manners: a narrow beam manner and a wide beam manner. The narrow beam manner is as follows: The SSB occupies a fixed frequency domain resource, and uses narrow beam polling scanning to sequentially cover different areas of a cell. The different areas may also be understood as different beams, and the terminal device may select a beam corresponding to best SSB signal quality for access. For example, refer to (a) in FIG. 1, one cell includes seven beams, and the SSB sequentially covers different beams, and (a) in FIG. 1 shows a case in which the SSB covers a beam 7 at a moment 0 (t=0) and covers a beam 2 at a moment 1 (t=1) by using a dashed line. The wide beam manner is as follows: The SSB covers an entire cell by using a wide beam. For example, refer to (b) in FIG. 1, one cell includes seven beams, and a case in which the SSB covers the entire cell is shown by using a dashed line. Compared with a narrow beam, energy of a wide beam is more dispersed, and quality of a signal received by a user is relatively lower.

### (2) Timing advance and timing offset

In a communication network, information sent by a network device to a terminal device is referred to as downlink information, and includes downlink control information, downlink data, and the like. Information sent by the terminal device to the network device is referred to as uplink information, and includes uplink control information, uplink data, and the like. To enable timing alignment between the uplink information and the downlink information when the uplink information arrives at the network device, the terminal device needs to perform timing advance (timing advance, TA) adjustment when sending the uplink information. Referring to FIG. 2, which is a schematic diagram of timing advance adjustment of uplink information. As shown in FIG. 2, the terminal device may perform timing advance adjustment for sending one piece of uplink information relative to a time point at which the terminal device receives a next piece of downlink information.

In a terrestrial network, after receiving a physical downlink shared channel (physical downlink shared channel, PDSCH) sent by a network device, a terminal device may send feedback information of the PDSCH, to feed back whether the PDSCH is successfully decoded. The feedback information is, for example, a hybrid automatic repeat request (hybrid automatic repeat request, HARQ) acknowledgment (acknowledge, ACK) or non-acknowledge (non-acknowledge, NACK). If the terminal device receives the PDSCH in a downlink slot (slot) n, the terminal device may feed back the HARQ-ACK or the HARQ-NACK in an uplink slot (n+K1). Alternatively, it is understood that the network device needs to receive the HARQ-ACK or the HARQ-NACK in the uplink slot (n+K1). In this case, a maximum value of timing advance adjustment that can be performed by a UE is K1 slot lengths. For example, a maximum value of K1 is 15. Therefore, when a subcarrier spacing (subcarrier spacing, SCS) is 30 kHz, one slot length is 0.5 ms, and a maximum timing advance TA adjustment amount that can be performed by the UE is 7.5 ms.

In the terrestrial network, an altitude difference between the network device and the terminal device is not large, but an altitude difference between a network device and a terminal device in the non-terrestrial network NTN is larger (generally greater than 500 km). Therefore, a round-trip transmission delay and a round-trip transmission delay difference of a terminal device in a same beam/cell in the NTN are far greater than a round-trip transmission delay and a round-trip transmission delay difference of a UE in a same cell in the terrestrial network. For example, when a diameter of a cell in a terrestrial cellular network is 350 km, a maximum round-trip transmission delay in the cell is 1.17 ms. However, in the MTN, when a satellite orbit height is 600 km and a beam diameter is 350 km, a communication elevation angle of the terminal device is 10 degrees, and a maximum round-trip transmission delay may reach about 13 ms. A larger round-trip transmission delay in the NTN causes a larger difference between timing of uplink information and timing of downlink information received by the network device side. Therefore, in the NTN network, an amount of timing advance adjustment for uplink information is relatively great.

It can be learned from the foregoing analysis that a round-trip transmission delay in a beam or a cell in the NTN is far greater than 7.5 ms. Therefore, the K1 slot lengths are not enough for the terminal device to perform timing advance adjustment, and a requirement for timing advance compensation for a round-trip transmission delay in a beam or a cell in the NTN cannot be met. As shown in FIG. 3, if it is still set for the NTN that the network device receives the feedback information of the terminal device at intervals of K1 slot lengths, a round-trip transmission delay between the terminal device and the network device is larger, and a timing advance adjustment amount of the uplink information sent by the terminal device is greater than the K1 slot lengths. This is equivalent to that the terminal device needs to send the feedback information of the PDSCH before the terminal device receives the PDSCH, which is obviously cannot be implemented. In this case, the terminal device cannot send ACK information on time.

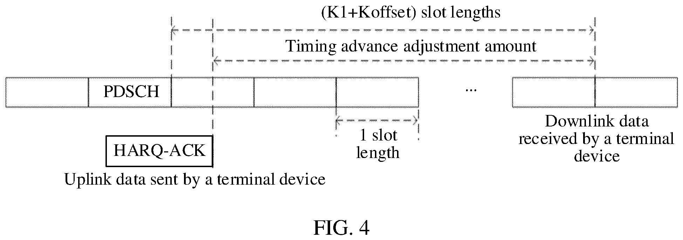

To resolve the problem that a timing advance adjustment amount for sending uplink information is relatively great, the NTN introduces a timing offset (timing offset, Koffset). That is, if the terminal device receives the PDSCH in a downlink slot (slot) n, the terminal device may feed back the HARQ-ACK or the HARQ-NACK in an uplink slot (n+K1+Koffset). Alternatively, it is understood that the network device needs to receive the HARQ-ACK or the HARQ-NACK in the uplink slot (n+K1+Koffset). In this way, there is a sufficient time length between the HARQ-ACK information sent by the terminal device and a next PDSCH to perform timing advance adjustment. As shown in FIG. 4, after the Koffset value is introduced, a slot in which the terminal device sends the HARQ-ACK information may be adjusted by using the Koffset value, to provide a sufficient time length for the terminal device to perform timing advance adjustment. (K1+Koffset) is greater than or equal to a timing advance TA adjustment amount that needs to be performed by the terminal device to send the HARQ-ACK, or may be understood as: In a unified time unit, a time corresponding to (K1+Koffset) is greater than or equal to a time corresponding to a TA.

### (3) Delayed start duration of RAR window (RAR_window offset)

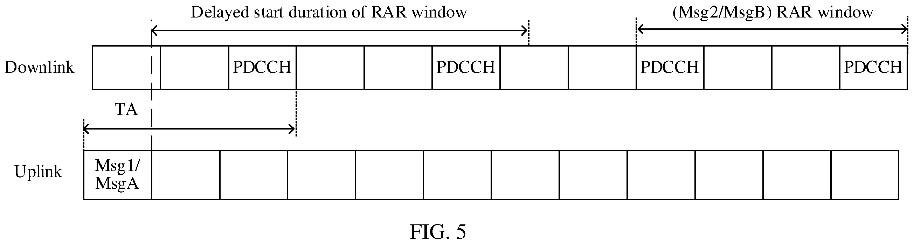

After the terminal device initiates random access, that is, initiates a random access sequence (the Msg1/MsgA) based on an occasion, the terminal device monitors a downlink control channel to receive a random access feedback (namely, the Msg2) initiated by the network device side. A window length for the terminal device to monitor the Msg2 is referred to as RAR_window. In terrestrial communication, because a round-trip transmission time of a signal is relatively short, after initiating a random access signal, the terminal device may detect scheduling information of a nearest PDCCH to receive the Msg2. However, in the non-terrestrial network, because a round-trip transmission delay is relatively long, the terminal device needs to wait for a relatively long time to receive the Msg2. Therefore, to reduce complexity of the terminal device, a parameter of a delay start duration of an RAR window (RAR_window offset) is introduced. The terminal device does not receive the Msg2 within a time corresponding to the RAR window offset. Therefore, the terminal device does not need to monitor the PDCCH in the time period. For example, refer to FIG. 5, the terminal device may send the Msg1 or the MsgA based on the timing advance adjustment amount, and after sending the Msg1 or the MsgA, delay starting of an RAR window based on the RAR window offset. FIG. 5 shows that at a next PDCCH time point of the RAR_window offset, an RAR window is started to receive the Msg2 or the MsgB.

### (4) Reference point

In the non-terrestrial network, a terminal device with a positioning function may obtain a round-trip transmission delay of a serving link through processing based on a location of the terminal device and a location of a network device (a satellite). The location of the network device may be obtained based on ephemeris information. However, the terminal device cannot obtain a round-trip transmission delay of a feeding link. If the network side compensates for a delay of an uplink signal, the terminal device cannot obtain a delay compensation value of the network side. In view of this, a first reference point is introduced, and the network device broadcasts a common timing advance (TA_common) corresponding to the network device to the first reference point, where the TA_common is determined based on a round-trip transmission delay between the network device and the first reference point. When sending uplink information, different terminal devices in a same cell may directly compensate for the common TA. The first reference point may be located at a satellite, a ground station, or another location, for example, a location on a serving link from a satellite to a terminal device, or a location on a feeding circuit from a satellite to a ground station. This is not limited in this embodiment of this application.

In the non-terrestrial network such as satellite communication, because a communication distance is long and a satellite moves at a high speed, the network side may perform frequency pre-compensation, for example, Doppler pre-compensation, when sending the downlink information (for example, downlink data). A Doppler compensation value is calculated based on Doppler generated by movement of the satellite relative to a second reference point. To enable the terminal device to know the compensation value, the network side may directly broadcast the Doppler compensation value, or may broadcast location information of the second reference point. Optionally, the second reference point may be selected as a location on the ground, for example, a reference point located in a beam center in a cell, a reference point located in a cell/beam and having a longest communication distance from the network device, or a reference point located in a cell/beam and having a closest communication distance from the network device.

It should be noted that, in this embodiment of this application, the first reference point is a reference point for determining the TA_Common, and the second reference point is a reference point related to frequency pre-compensation. The first reference point and the second reference point are distinguished by names, and it does not mean that a location of the first reference point is different from a location of the second reference point. A location relationship between the first reference point and the second reference point is not limited in this embodiment of this application.

(5) A plurality of involved in embodiments of this application refers to two or more. The term "and/or" describes an association relationship between associated objects and represents that three relationships may exist. For example, A and/or B may represent the following three cases: Only A exists, both A and B exist, and only B exists. The character "/" usually indicates an "or" relationship between the associated objects. In addition, it should be understood that although the terms such as first and second may be used in embodiments of the present invention to describe objects, these objects are not limited by these terms. These terms are merely used to distinguish the objects from each other.

(6) The terms "including", "having", and any other variant thereof mentioned in descriptions of embodiments of this application are intended to cover non-exclusive inclusion. For example, a process, a method, a system, a product, or a device that includes a series of steps or units is not limited to steps or units that have been listed, but optionally further includes other unlisted steps or units, or optionally further includes other steps or units inherent to the process, the method, the product, or the device. It should be noted that, in embodiments of this application, the word "exemplary" or "for example" or the like is used to represent giving an example, an illustration, or a description. Any embodiment or design scheme described as "exemplary" or "for example" in embodiments of this application should not be interpreted as being more preferred or having more advantages than another embodiment or design scheme. Exactly, use of the word "exemplary", "for example", or the like is intended to present a related concept in a specific manner.

In a related technical solution, introducing the timing offset Koffset in non-terrestrial network communication is usually to broadcast a Koffset for a cell in which the terminal device is located. For example, the Koffset is set based on a maximum TA in the cell. However, terminal devices in different areas in a cell require different scheduling delay degrees. Such a manner may not adapt to terminal devices in some areas, for example, may increase scheduling delays of some terminal devices that do not require a large Koffset, which is not flexible enough. Based on this, an embodiment of this application provides a communication parameter indication method, so that a timing offset can be set to a beam level or a user level, to more flexibly indicate a communication parameter to a terminal device, thereby reducing a scheduling delay.

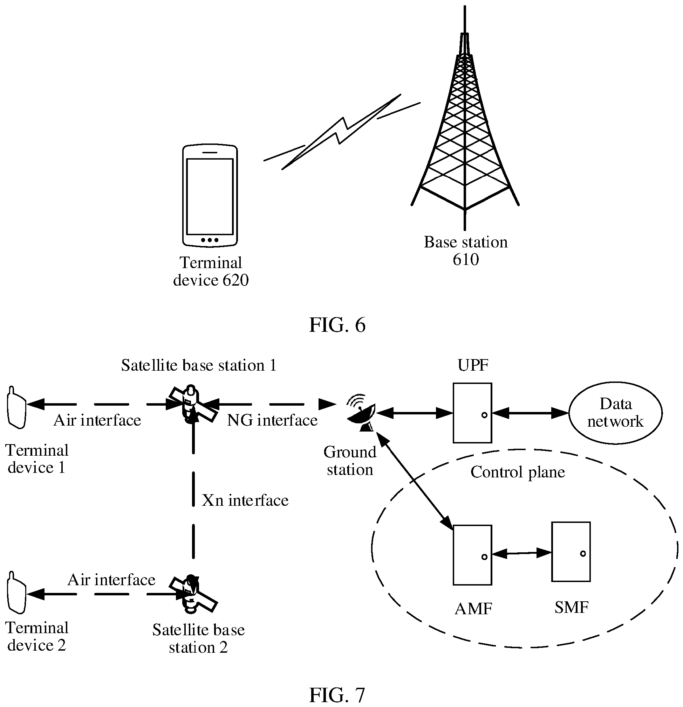

The communication parameter indication method provided in this embodiment of this application may be applied to a communication system shown in FIG. 6. The communication system includes a base station 610 and a terminal device 620. In a specific implementation process of this embodiment of this application, the terminal device 620 may include various handheld devices, vehicle-mounted devices, wearable devices, or computing devices that have a wireless communication function, or other processing devices connected to a wireless modem. The terminal device may be a mobile station (mobile station, MS), a subscriber unit (subscriber unit), a cellular phone (cellular phone), a smartphone (smartphone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal device, an unmanned aerial vehicle, or the like. This is not limited in this embodiment of this application. The base station 610 may be a terrestrial base station or a non-terrestrial base station, where the terrestrial base station includes but is not limited to a base station on the ground and a base station on a mountain or in a water area, and the non-terrestrial base station includes but is not limited to: a satellite base station, a hot air balloon that can realize a base station function, a high-altitude platform or flying platform, an unmanned aerial vehicle, or the like. The base station provides a radio access service, schedules radio resources for an access terminal, and provides a reliable wireless transmission protocol, a reliable data encryption protocol, and the like. It should be noted that, in an actual application, there may be one or more base stations and terminal devices. A quantity and a style of the base stations and the terminal devices in the communication system shown in FIG. 6 are merely examples for adaptability. This is not limited in this embodiment of this application.

The communication system may be a long term evolution (long term evolution, LTE) system that supports a 4G access technology; a new radio (new radio, NR) system that supports a 5G access technology; a new radio vehicle to everything (vehicle to everything, NR V2X) system; applied to an LTE and 5G hybrid networking system; a device-to-device (device-to-device, D2D) communication system, a machine-to-machine (machine to machine, M2M) communication system, an Internet of Things (Internet of Things, IoT), or an unmanned aerial vehicle communication system; a communication system that supports a plurality of wireless technologies, for example, an LTE technology and an NR technology; or a non-terrestrial communication system, for example: a satellite communication system or a high-altitude communication platform. In addition, optionally, the communication system may also be applicable to a narrowband Internet of Things (narrowband Internet of Things, NB-IoT) system, an enhanced data rate for GSM Evolution (enhanced data rate for GSM Evolution, EDGE) system, and a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a long term evolution (long term evolution, LTE) system, and a future-oriented communication technology.

An example in which the communication system is a non-terrestrial communication system is used for description. Refer to FIG. 7, an embodiment of this application further provides a communication system. The communication system includes a satellite base station, a terminal device, and a ground station. The terminal device may communicate with the satellite base station through an air interface, and may access a satellite network through the air interface, and initiate a service such as a call or Internet access. The ground station may be disposed on the ground. The satellite base station forwards a signal, so that the terminal device and the ground station can communicate with each other. The satellite base station may communicate with the ground station through an NG interface, and the ground station is responsible for forwarding signaling and service data between the satellite base station and a core network. In addition, when the communication system includes a plurality of satellite base stations, the satellite base stations may communicate with each other through an Xn interface, for example, exchange handover-related signaling. A communication link between the satellite base station and the terminal device may be referred to as a serving link, and a communication link between the satellite base station and the ground station may be referred to as a feeding link. As an example, FIG. 7 illustrates one ground station and two satellite base stations: a satellite base station 1 and a satellite base station 2, and two terminal devices: a terminal device 1 and a terminal device 2. The terminal device 1 communicates with the satellite base station 1 through an air interface, the satellite base station 1 communicates with the ground station through an NG interface, the satellite base station 1 communicates with the satellite base station 2 through an Xn interface, and the satellite base station 2 communicates with the terminal device 2 through an air interface. The foregoing air interface may be various types of air interfaces, for example, a 5G air interface.

The ground station may be any device with a wireless transceiver function, and is mainly configured to implement functions such as a wireless physical control function, resource scheduling, radio resource management, radio access control, and mobility management, and provide a reliable wireless transmission protocol, a data encryption protocol, and the like. Specifically, the ground station may alternatively be an access network device, and may be a device that supports wired access, or may be a device that supports wireless access. For example, the ground station may be an access network (access network, AN)/radio access network (radio access network, RAN) device, and includes a plurality of 5G-AN/5G-RAN nodes. The 5G-AN/5G-RAN node may be: an access point (access point, AP), a NodeB (NodeB, NB), an enhanced NodeB (enhanced NodeB, eNB), a next-generation NodeB (next-generation NodeB, gNB), a transmission reception point (transmission reception point, TRP), a transmission point (transmission point, TP), or another access node. In addition, it should be noted that, the ground station may alternatively be described as a gateway station. This is not limited in this embodiment of this application.

The foregoing satellite base station may alternatively be another flying platform or referred to as a high-altitude platform, for example, an unmanned aerial vehicle, a hot air balloon that can implementing a base station function, and the like. For example, the flying platform may include a low-orbit satellite, a medium-orbit satellite, a geosynchronous orbit satellite, an unmanned flying system platform, or a high-orbit satellite based on an altitude of the flying platform. The satellite base station may transmit downlink data to the terminal, and may encode the downlink data by using channel coding. The encoded downlink data is transmitted to the terminal after constellation modulation. The terminal may transmit uplink data to the satellite base station, or may encode the uplink data by using channel coding. The encoded uplink data is transmitted to the satellite base station after constellation modulation.

In addition, the communication system shown in FIG. 7 may further include a core network device and a data network (data network, DN). The terminal device may communicate with the data network through the satellite base station, the ground station, and the core network device.

The core network device may be configured to send, to the data network, data of the terminal device that is sent by the satellite base station/the ground station. Specifically, the core network device may be configured to implement services such as user access control, mobility management, session management, user security authentication, and charging. The core network device may include a plurality of functional units. For example, the core network device may be divided into functional entities on a control plane and a data plane. The functional entities on the control plane may include an access and mobility management unit (access and mobility management function, AMF), a session management unit (session management function, SMF), and the like. The functional entities on the data plane may include a user plane unit (user plane function, UPF) and the like. For example, FIG. 7 shows a functional entity on the data plane: a UPF, and functional entities on the control plane: an AMF and an SMF.

The access and mobility management unit is mainly responsible for user equipment access authentication, mobility management, signaling interaction between functional network elements, and the like, for example: managing a user registration status, a user connection status, user registration and network access, tracking area update, user authentication during cell handover, and key security.

The session management unit may also be referred to as a session management function, a multicast/broadcast service management function (multicast/broadcast service management function, MB-SMF), a multicast session management network element, or the like, which is not limited. The session management network element is mainly configured to implement a user plane transmission logical channel, for example: session management functions such as establishment, release, and change of a packet data unit (packet data unit, PDU) session.

The user plane unit may also be referred to as a PDU session anchor (PSF), a user plane function, or a multicast/broadcast user plane function (multicast/broadcast user plane function, MB-UPF). A user plane network element may serve as an anchor on the user plane transmission logical channel, and is mainly configured to implement functions such as routing and forwarding of user plane data, for example: establishing a channel (that is, the user plane transmission logical channel) between terminals, forwarding data packets between the terminal device and the DN on the channel, and performing data packet filtering, data forwarding, rate control, charging information generation, traffic statistics, and security eavesdropping on each terminal. A multicast/broadcast (multicast/broadcast, MB) service controller (MB service controller) has service management functions such as group management, security management, and service announcement.

It should be noted that, in addition to the foregoing units, the core network device may further include a policy control unit (policy control function, PCF), an application function (application function, AF) unit, and the like. This is not limited.

The data network may be an operator network that provides a data transmission service to the terminal device, for example: an operator network that can provide an IP multimedia service (IP multimedia service, IMS) to the terminal device. An application server (application server, AS) may be deployed in the DN, and the application server may provide the data transmission service to the terminal device.

The communication parameter indication method provided in embodiments of this application is applied to a long-distance communication scenario, for example, a satellite communication scenario or another long-distance communication scenario. This is not limited.

The following describes in detail the communication parameter indication method provided in embodiments of this application with reference to Solution 1 to Solution 3. Implementations in Solution 1, Solution 2, and Solution 3 may be combined with each other.

### Solution 1:

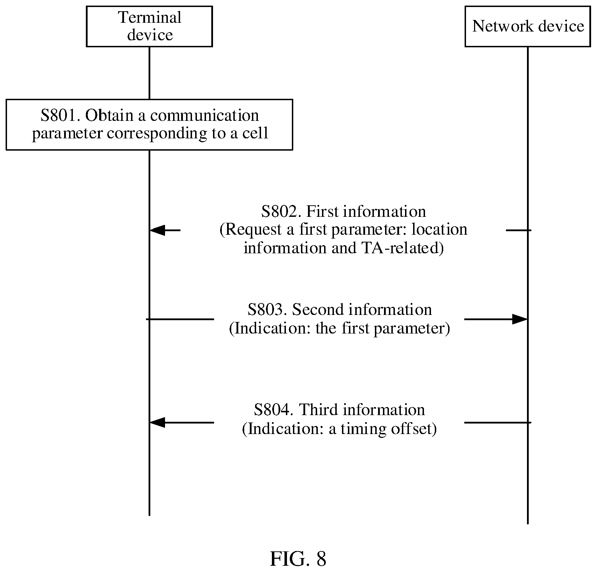

Refer to a communication parameter indication method shown in FIG. 8, the method includes the following procedure.

S801. A terminal device obtains a communication parameter corresponding to a cell in which the terminal device is located.

Optionally, the communication parameter corresponding to the cell in which the terminal device is located may be configured by a network device, or may be a communication parameter predefined for the cell.

Optionally, the communication parameter of the cell in which the terminal device is located includes at least one of the following: a reference timing offset at a cell level, and a reference timing offset at each beam level included in the cell. It may be understood that one beam level may correspond to some beams in a cell. The beams may include one or more beams, but a quantity of the included beams is less than or equal to a quantity of all beams in the cell. Each beam may correspond to one or more terminal devices. Alternatively, one beam level may correspond to some areas in a cell. The areas may include one or more terminal devices, but a quantity of the included terminal devices is less than or equal to a quantity of all terminal devices in the cell. A user level corresponds to one terminal device in a cell.

Optionally, the communication parameter may be recorded in a differential value manner, or the communication parameter may be directly recorded. For example, Table 1 is a list of communication parameters recorded in a differential value manner, and Table 2 shows communication parameters that are directly recorded.

**Table 1**

| Parameter index | Parameter value |
|---|---|
| 0 | 20 |
| 1 | 0 |
| 2 | 2 |
| 3 | 4 |

The parameter index in Table 1 is for identifying a cell level or a beam level. For example, a parameter index "0" shown in Table 1 is for identifying a cell level, and parameter indexes "1", "2", and "3" shown in Table 1 are for identifying beam levels. That is, Table 1 shows a case in which one cell includes three beam levels. However, it may be understood that one cell may alternatively include another quantity of beam levels. One beam level corresponds to one or more beams. Alternatively, in an actual application, one or more rows in Table 1 may be used, or a new row may be added based on Table 1. This is not limited in this embodiment of this application.

The parameter index in each row is associated with or corresponds to one parameter value, and the parameter value is for determining a reference timing offset at a cell level identified by the parameter index or a reference timing offset at a beam level identified by the parameter index. A normalized value may be obtained for each parameter value. A unit of the parameter value may be a unit related to a granularity of a scheduled time resource, such as a sampling interval, a slot, a mini-slot, or a sub-slot. This is not limited in this embodiment of this application.

A parameter value corresponding to any parameter index in a plurality of parameter indexes may be used to represent a reference timing offset corresponding to the parameter index, and the reference timing offset is used as a basic value. Parameter values corresponding to other parameter indexes may all be represented by a differential value compared with the foregoing basic value. The differential value may be a positive difference or a negative difference. Specifically, in Table 1, a reference value (20) at a cell level (the parameter index is "0") is used to represent a reference timing offset at the cell level, and 20 is used as a basic value. Reference values at other beam levels are shown in Table 1 in a form of a differential value. For example, a parameter value corresponding to the parameter index "1" is "0", which indicates that a reference timing offset at the beam level identified by the parameter index "1" is the same as the reference timing offset at the cell level, and both are 20. For another example, a parameter value corresponding to the parameter index "2" is "2", which indicates that a difference between a reference timing offset at the beam level identified by the parameter index "2" and the reference timing offset at the cell level is 2. Whether the difference is plus 2 or minus 2 compared with the reference timing offset at the cell level may be agreed in advance. That is, using Table 1 as an example, the reference timing offset at the beam level identified by the parameter index "2" may be 18 or 22. Specifically, the reference timing offset may be determined depending on whether the reference value is a positive value or a negative value specified in an actual application. Setting the parameter value through a differential value can reduce signaling overheads for indicating the communication parameter.

**Table 2**

| Parameter index. | Parameter value |
|---|---|
| 0 | 4 |
| 1 | 5 |
| 2 | 6 |
| 3 | 7 |

The parameter index in Table 2 is for identifying a cell level or a beam level. For example, a parameter index "0" shown in Table 2 is for identifying a cell level, and parameter indexes "1", "2", and "3" shown in Table 2 are for identifying beam levels. That is, Table 2 shows a case in which one cell includes three beam levels. However, it may be understood that one cell may alternatively include another quantity of beam levels, and one beam level corresponds to one or more beams. In an actual application, one or more rows in Table 2 may be used, or a new row may be added based on Table 2. This is not limited in this embodiment of this application. The parameter index in each row is associated with or corresponds to one parameter value, and the parameter value is for indicating a reference timing offset at a cell level identified by the parameter index or a reference timing offset at a beam level identified by the parameter index. A normalized value may be obtained for each parameter value. A unit of the parameter value may be a unit related to a granularity of a scheduled time resource, such as a sampling interval, a slot, a mini-slot, or a sub-slot. This is not limited in this embodiment of this application.

A parameter value corresponding to each parameter index may be used to represent a reference timing offset corresponding to the parameter index. For example, in Table 2, a reference value (4) at a cell level (the parameter index is "0") is used to represent a reference timing offset at the cell level; a reference value (5) at a beam level identified by the parameter index "1" is used to represent a reference timing offset at the beam level; a reference value (6) at a beam level identified by the parameter index "2" is used to represent a reference timing offset at the beam level; and a reference value (7) at a beam level identified by the parameter index "3" is used to represent a reference timing offset at the beam level.

Optionally, the communication parameter corresponding to the cell in which the terminal device is located may further include at least one of the following: one or more parameters related to a first reference point; and one or more parameters related to a second reference point. The parameter related to the first reference point may be location information of the first reference point, or may be a corresponding common timing advance TA_common between the network device and the first reference point, or may be location information of the first reference point and a corresponding common timing advance TA_common between the network device and the first reference point. The parameter related to the second reference point may be location information of the second reference point, or may be frequency domain pre-supplementation corresponding to the second reference point, or may be location information of the second reference point and frequency domain pre-supplementation corresponding to the second reference point.

Optionally, the communication parameter corresponding to the cell in which the terminal device is located may further include: a timing parameter (timer), where the timing parameter refers to a time at which the terminal device performs beam switching, for example, after a message 4, a message B, or random access in a random access process, the terminal device may perform beam switching at a corresponding time point based on the time indicated by the timing parameter. The terminal device obtains or updates the beam switching-related parameter, so that signaling overheads of beam switching of the terminal device can be reduced.

S802. A network device sends first information to the terminal device, where the first information requests a first parameter of the terminal device, and the first parameter includes at least one of the following: location information of the terminal device and a parameter related to a first timing advance TA. The parameter related to the TA is determined based on a round-trip transmission delay between the first reference point and the terminal device, or the parameter related to the TA is determined based on a round-trip transmission delay between the network device and the terminal device.

Optionally, the parameter related to the TA may include a value of the TA, and the value of the TA is determined based on the round-trip transmission delay between the first reference point and the terminal device. The first reference point may be a point on a serving link between the terminal device and the network device. Alternatively, the first reference point may be a point on a feeding link between a ground station and the network device, or may be located at another location, for example, a ground station. This is not limited in this embodiment of this application.

Optionally, the parameter related to the TA may include information indicating a round-trip transmission delay of the serving link between the network device and the terminal device. That is, the parameter related to the TA is determined based on the round-trip transmission delay between the network device and the terminal device. The network device requests the terminal device to report the information indicating the round-trip transmission delay of the serving link, and may subsequently determine, based on a TA_common and the foregoing round-trip transmission delay of the serving link, a TA corresponding to the terminal device.

In a scenario in which the first reference point is located on the feeding link, signaling overheads can be reduced. Optionally, a function of the first information may be understood as that: The network device sends the first information, to indicate the first parameter that needs to be reported by the terminal device. A value of the first information may be used to identify the first parameter that needs to be reported by the terminal device.

In an optional implementation, when the value of the first information is a first value or a second value, the first parameter that needs to be reported by the terminal device includes the location information of the terminal device; or when the value of the first information is a third value, the first parameter includes the parameter related to the TA. In addition, when the value of the first information is a fourth value, it indicates that the terminal device does not need to report the first parameter. Further, the first information may further indirectly indicate to set (or update) a timing offset to a cell level, a beam level, or a user level. For example, when the value of the first information is the first value, it indicates that the timing offset is updated to a beam level. For another example, when the value of the first information is the second value or the third value, it indicates that the timing offset is updated to a user level. For another example, when the value of the first information is the fourth value, it indicates that the timing offset is set to a cell level. Alternatively, in a case that a cell level is used by default, when the value of the first information is the fourth value, it may indicate that the timing offset is not updated, and the cell level is used.

For example, the first information is described by using Table 3 below as an example. The fourth value is 00, the first value is 01, the second value is 10, and the third value is 11.

**Table 3**

| First information | Meaning |
|---|---|
| 00 | Do not update the timing offset, and use a cell level. |
| 01 | Update to a beam level |
| 10 | Method 1 for updating to a user level |
| 11 | Method 2 for updating to a user level |

In another optional implementation, the value of the first information is a fifth value or a sixth value, and when the value of the first information is the fifth value, it indicates that the terminal device does not need to report the first parameter, and indirectly notifies the terminal device not to update the timing offset and use the cell level. When the value of the first information is the sixth value, it indicates, by default, the terminal device to report the location information of the terminal device.

S803. The terminal device sends second information based on the first information, where the second information indicates the first parameter.

In an optional implementation, the second information is the first parameter, that is, the terminal device reports the parameter requested by the network device. In another optional implementation, a reference point is introduced, and the second information may indicate the first parameter in a differential value manner. The differential reporting manner can reduce signaling reporting overheads.

For example, for the location information of the terminal device included in the first parameter, the terminal device may directly report the location information of the terminal device. Alternatively, to reduce signaling overheads, the terminal device may report a differential geographical location based on a location of the reference point. The following describes an optional implementation of reporting a differential geographical location by the terminal device:

It is assumed that a location of a reference point broadcast by the network device is (X, Y, Z), or only X and Y are broadcast. The terminal device may obtain a value of Z in the following manner: X² + Y² + Z² = R², where R is a radius of the earth. The second information sent by the terminal device may be ΔX, ΔY, or ΔZ, to indicate the location information of the terminal device. Actually, the location information of the terminal device is (X+ΔX, Y+ΔY, Z+ΔZ ). Alternatively, to reduce signaling overheads, the second information sent by the terminal device may include ΔX and ΔY. The network device may obtain, based on the following formula (X + ΔX)² + (Y + ΔY)² + ZUE² = R², a parameter value ZUE of the location information of the terminal device on a Z axis, and the terminal device may report, to the network device, information indicating whether the value is a positive or negative value. Alternatively, one bit is used in the second information to indicate whether the value is a positive or negative value. Alternatively, the terminal device does not report, and the network device may directly determine a positive or negative sign of ZUE based on a positive or negative sign of the reference point Z.

For another example, for the parameter related to the TA included in the first parameter, the terminal device may directly report the parameter related to the TA. Alternatively, to reduce signaling overheads, the terminal device may perform reporting in a differential value manner. Specifically, if the network device broadcasts a common TA, the terminal device reports a differential value between the TA and the common TA in a differential value manner by using the common TA indicated by the network device as a basic value. Alternatively, if the network device broadcasts a reference point, the terminal device may calculate a value of a corresponding common TA by itself, and then report a differential value between the TA and the common TA in a differential value manner by using the calculated common TA as a basic value. S804. The network device sends third information to the terminal device, where the third information indicates a timing offset, the timing offset is for determining a scheduling delay degree of sending information by the terminal device, and the timing offset is related to at least one of a communication parameter corresponding to a cell in which the terminal device is located and the first parameter.

Optionally, the timing offset may be at a cell level, a beam level, or a user level, depending on content included in the first information by the network device. For example, when the value of the first information is the first value, it indicates that the network device expects to update the timing offset to a beam level, and the timing offset is a reference timing offset at a beam level corresponding to the terminal device. For another example, when the value of the first information is the second value or the third value, it indicates that the network device expects to update the timing offset to a user level, and the network device determines the timing offset based on the first parameter reported by the terminal device. For another example, when the value of the first information is the fourth value, it indicates that the network device expects to set the timing offset to a cell level. Alternatively, in a case that a cell level is used by default, when the value of the first information is the fourth value, it may indicate that the timing offset is not updated, and the cell level is used.

Optionally, the network device may determine, based on the first parameter indicated by the second information sent by the terminal device, the beam level corresponding to the terminal device. Specifically, when the first parameter includes the location information of the terminal device, the network device may determine, based on the location information of the terminal device, an area or a beam in which the terminal device is located in the cell, and further determine, based on a correspondence between an area/beam and a beam level, the beam level corresponding to the terminal device.

Optionally, if the network device expects to update the timing offset to a beam level, the third information sent by the network device may include a parameter index of the beam level corresponding to the terminal device, and the terminal device may determine a reference timing offset at the beam level based on the parameter index of the beam level included in the third information. Alternatively, the third information sent by the network device may include a beam ID corresponding to the terminal device, and the terminal device may obtain a reference timing offset at a corresponding beam level based on a correspondence between a beam and a beam level. Alternatively, the third information sent by the network device may include the timing offset. Alternatively, the third information sent by the network device may include a differential parameter value related to the timing offset, for example, a differential parameter value with a reference timing offset at a cell level shown in Table 1. If the network device expects to update the timing offset to a user level, the third information sent by the network device may include the timing offset or a parameter used by the terminal device to calculate the timing offset.

In a satellite communication scenario, updating a communication parameter by a terminal device helps reduce a scheduling delay. In this embodiment of this application, a communication parameter update manner and content reported by the terminal device are indicated, so that various communication parameter update manners can be compatible, including beam-level, cell-level, and user-level communication parameter updates.

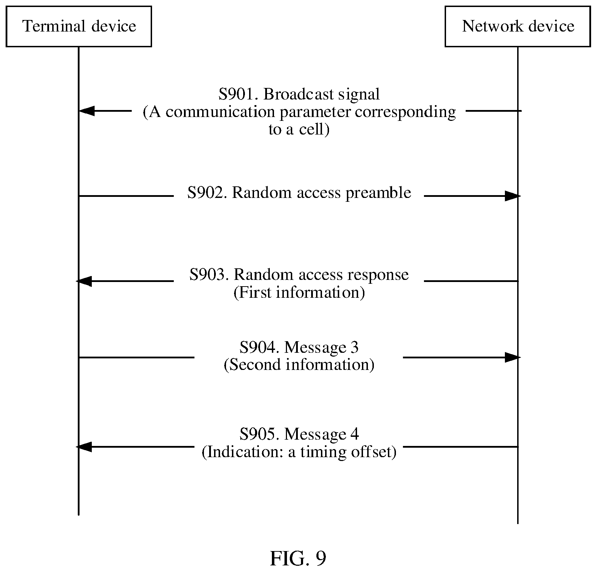

Further, the foregoing Solution 1 may be applied to a four-step random access mechanism or a two-step random access mechanism, which is described in detail below with reference to FIG. 9 to FIG. 11.

FIG. 9 shows a random access manner. Based on the four-step random access mechanism, the random access manner mainly includes the following procedure.

S901. A network device delivers a broadcast signal, and a terminal device receives the broadcast signal delivered by the network side.

The broadcast signal includes a synchronization signal SSB, and the broadcast signal further includes a communication parameter at a cell level and/or a beam level, for example, a timing offset at a cell level, a group of timing offsets at a beam level, or timing offsets at a cell level and beam levels indicated by a group of differential parameter values, as shown in Table 1.

Optionally, when there are relatively few terminal devices in a cell, that is, there are few users, the broadcast signal may carry only a communication parameter at a cell level, for example, a timing offset at a cell level. Therefore, broadcast signaling overheads can be reduced. Another communication parameter may be carried in a corresponding message in the following manner: The network device may further indicate, in a subsequent message 4, timing offsets at a cell level and beam levels indicated by a group of differential parameter values or timing offsets at a group of beam levels.

S902. The terminal device sends a random access preamble (namely, a message 1) to the network device.

S903. The network device sends a message 2, that is, a random access response RAR message, to the terminal device, where the RAR message carries first information and indirectly indicates that the network device expects to update a timing offset to a user level or a beam level.

For example, based on Table 3, if the value of the first information is 00, a reference timing offset at a cell level, for example, the first parameter value in Table 1, is used for scheduling a message 3. If the value of the first information is 01 or 10, the terminal device reports the location information of the terminal device in the message 3. If the value of the first information is 11, the terminal device reports the parameter related to the TA in the message 3.

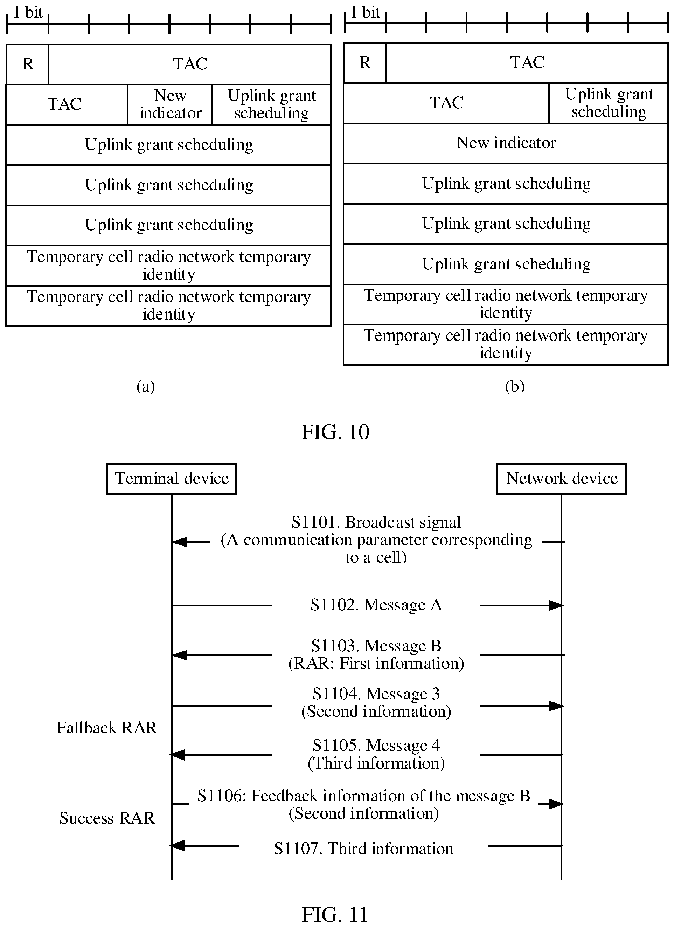

In an optional implementation, redundant bits of TAC signaling in the RAR message may be used to implement the first information. For example, a length of a TAC field is 12 bits, and last two bits of the TAC field may be occupied to indicate the first information, thereby reducing waste of bits. For example, a new indicator (new indicator) is used to represent the first information, and (a) in FIG. 10 shows a case in which the new indicator occupies bits of the TAC field. In another optional implementation, one piece of MAC CE signaling may be added to the RAR message to indicate the first information, for example, a new indicator (new indicator) shown in (b) in FIG. 10. The new indicator occupies eight bits. In addition, (a) in FIG. 10 and (b) in FIG. 10 further illustrate other fields, for example: a reserved bit whose length is 1 bit, uplink grant (uplink grant) scheduling whose length is 27 bits, and a temporary cell radio network temporary identifier (temporary cell radio network temporary identity, TC-RNTI) whose length is 16 bits.

S904. The terminal device sends a message 3 to the network device, where the message 3 carries second information.

In a scenario in which the SSB is covered by a wide beam, if the first parameter indicated by the second information is the parameter related to the TA, the network device may update the timing offset to a user level, or if the first parameter indicated by the second information is the location information of the terminal device, the network device may update the timing offset to a user level, or may update the timing offset to a beam level.

S905. The network device sends a message 4 to the terminal device, where the message 4 carries third information.

After receiving the message 4, the terminal device obtains a communication parameter, for example, a timing offset at a user level or a beam level, based on the third information carried in the message 4. When the terminal device feeds back a decoding status of the message 4, a used scheduling parameter has been updated to a parameter at a user level or a beam level.

In this embodiment of this application, based on the four-step random access mechanism, the first time that the timing offset needs to be used is to send the message 3. Because the user has not obtained a related update parameter at this time, a communication parameter at a cell level may be used to send the message 3. When feeding back the message 4, the terminal device uses the timing offset parameter for the second time, and may update, based on content (the third information) of the message 4, a communication parameter used for feeding back, for example, using a communication parameter at a beam level. Certainly, if 00 is indicated in the broadcast information, a communication parameter at a cell level is used, and no update is performed. If 01 or 10 is indicated, a communication parameter at a beam level is used, and if 11 is indicated, a communication parameter at a user level is used.

In addition, in an extended example, in S903, the first information carried by the network device in the message 2 may also be sent in advance in S901, that is, the network device may carry the first information in the broadcast signal. In this way, the terminal device can learn, when listening to the broadcast signal, a parameter that needs to be reported in the message 3. This helps the terminal device prepare or determine a related parameter in advance, for example, the location information of the terminal device and the parameter related to the TA, so that communication efficiency can be improved. Considering that signaling overheads for broadcasting a synchronization signal are high, this example may be applicable to a scenario in which there are a large quantity of users or a large quantity of terminal devices in a cell.

In an extended example, the network device may not carry the third information in the message 4. Instead, the network device sends the third information after the terminal device accesses the network device. This is not limited in this embodiment of this application.

FIG. 11 shows a random access manner. Based on the two-step random access mechanism, the random access manner mainly includes the following procedure.

S1101. A network device delivers a broadcast signal, and a terminal device receives the broadcast signal delivered by the network side.

The broadcast signal includes a synchronization signal SSB, and the broadcast signal further includes a communication parameter at a cell level and/or a beam level, for example, a timing offset at a cell level, a group of timing offsets at a beam level, or timing offsets at a cell level and beam levels indicated by a group of differential parameter values, as shown in Table 1.

Optionally, when there are relatively few terminal devices in a cell, that is, there are few users, the broadcast signal may carry only a communication parameter at a cell level, for example, a timing offset at a cell level. Therefore, broadcast signaling overheads can be reduced. Another communication parameter may be carried in a corresponding message in the following manner: The network device may further indicate, in a subsequent message B, timing offsets at a cell level and beam levels indicated by a group of differential parameter values or timing offsets at a group of beam levels.

S1102. The terminal device sends a message A to the network device.

S1103. The network device sends a message B to the terminal device, where the message B includes first information.

Optionally, the first information is added to RAR signaling of the message B, to indicate a first parameter that needs to be reported by the terminal device.

In an optional implementation, if a type of the RAR signaling is a fallback RAR (fallback RAR), redundant bits of TAC signaling in the RAR may be used to implement the first information. For example, a length of a TAC field is 12 bits, and last two bits of the TAC field may be occupied to indicate the first information, thereby reducing waste of bits. For example, a new indicator (new indicator) is used to represent the first information, and (a) in FIG. 10 shows a case in which the new indicator occupies bits of the TAC field. Alternatively, one piece of MAC CE signaling may be added to the RAR to indicate the first information, for example, a new indicator (new indicator) shown in (b) in FIG. 10. In addition, if the type is a fallback RAR, the random access falls back from two-step random access to four-step random access, that is, transmission of a message 3 and a message 4 is continued based on an indication of the message B. In this case, after S1103 is performed, S 1104 and S 1105 are performed. S1104. The terminal device sends a message 3 to the network device, where the message 3 carries second information. S1105. The network device sends a message 4 to the terminal device, and optionally, the message 4 carries third information; or after the terminal device accesses the network device, the network device sends third information to the terminal device.

In an optional implementation, if the type of the RAR signaling is a success RAR, it indicates that fallback is not performed, and feedback of the message B continues to be performed. That is, after S1103 is performed, S1106 and S1107 are performed. S1106. The terminal device sends feedback information of the message B to the network device, where the feedback information carries the second information, so that the first parameter of the terminal device is reported in the feedback of the message B. S1107. After the terminal device accesses the network device, the network device sends the third information to the terminal device. Alternatively, if the type of the RAR signaling is a success RAR, it indicates that fallback is not performed, and feedback of the message B continues to be performed. The network device may introduce new timing offset resource scheduling information into the message B, to indicate the terminal device to report the geographical location information and the parameter related to the TA on a time-frequency resource after receiving the message B. Alternatively, the terminal device may report the TA or the geographical location information on a time-frequency resource after the user performs feedback for the MsgB.

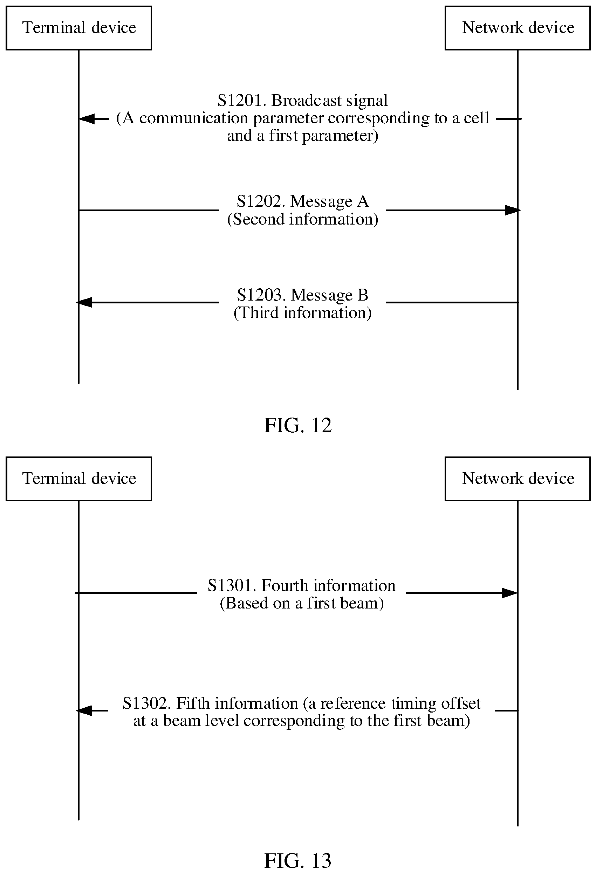

FIG. 12 shows a random access manner. Based on the two-step random access mechanism, the random access manner mainly includes the following procedure.

S 1201. A network device delivers a broadcast signal, and a terminal device receives the broadcast signal delivered by the network side.

The broadcast signal includes a synchronization signal SSB, and the broadcast signal further includes a communication parameter at a cell level and/or a beam level, for example, a timing offset at a cell level, a group of timing offsets at a beam level, or timing offsets at a cell level and beam levels indicated by a group of differential parameter values, as shown in Table 1. The broadcast signal further includes first information, that is, the network device informs the terminal device of, in a broadcast manner, content that needs to be carried in a message A.

Optionally, when there are relatively few terminal devices in a cell, that is, there are few users, the broadcast signal may carry only a communication parameter at a cell level, for example, a timing offset at a cell level. Therefore, broadcast signaling overheads can be reduced. Another communication parameter may be carried in a corresponding message in the following manner: The network device may further indicate, in a subsequent message B, timing offsets at a cell level and beam levels indicated by a group of differential parameter values or timing offsets at a group of beam levels.

S1202. The terminal device sends a message A to the network device, where the message A carries second information, and the second information indicates a first parameter.

For example, based on Table 3, if the value of the first information is 00, the terminal device does not report the location information and the parameter related to the TA in the message A. If the value of the first information is 01 or 12, the terminal device needs to report the location information in the message A. If the value of the first information is 12, the terminal device needs to report TA-related such as the parameter related to the TA in the message A.

S1203. The network device sends a message B to the terminal device, where the message B includes third information.

After receiving the message B, the terminal device obtains a communication parameter, for example, a timing offset at a user level or a beam level, based on the third information carried in the message B. When the terminal device feeds back a decoding status of the message B, a used scheduling parameter has been updated to a parameter at a user level or a beam level.

In this embodiment of this application, based on the two-step random access mechanism, a timing offset needs to be used for the first time, that is, feedback of the message B, and a communication parameter at a beam level or a user level, such as the timing offset, may be directly used. In this way, when uplink data scheduling is performed for the first time in two-step random access, a communication parameter at a beam or user level can be used, which is more flexible.

In conclusion, Solution 1 provided in embodiments of this application may be applied to a scenario in which synchronization signal SSB is covered by a wide beam, and consideration of the location information of the terminal device, and a timing advance amount between the terminal device and the reference point or between the terminal device and the network device is introduced, to update the timing offset to a beam level or a user level, so that the communication parameter is more flexibly indicated to the terminal device.

### Solution 2:

Refer to a communication parameter indication method shown in FIG. 13, the method includes the following procedure.

S1301. A terminal device sends fourth information based on a first beam, where the fourth information requests to access a network device.

Optionally, based on the four-step random access mechanism, the fourth information may be a message 1 or may be referred to as a random access preamble sequence. Alternatively, based on the two-step random access mechanism, the fourth information may be a message A.

Optionally, in a scenario in which the synchronization signal is covered by a narrow beam, the terminal device may determine the first beam based on a received synchronization signal. A synchronization signal received by the terminal device on the first beam has best signal quality, and the terminal device may subsequently access a network based on the first beam.

S1302. The network device sends fifth information to the terminal device, where the fifth information indicates a reference timing offset at a beam level corresponding to the first beam, and the reference timing offset is for determining a scheduling delay degree of sending information by the terminal device.

Optionally, based on the four-step random access mechanism, the fifth information may be a message 2 or a random access response message. Alternatively, based on the two-step random access mechanism, the fourth information may be a message B.

Optionally, it may be set that one beam level may correspond to some beams in a cell. The beams may include one or more beams, but a quantity of the included beams is less than or equal to a quantity of all beams in the cell. Each beam may correspond to one or more terminal devices. When receiving the fourth information sent by the terminal device on the first beam, the network device determines the beam level corresponding to the first beam, and indicates the reference timing offset at the beam level corresponding to the first beam to the terminal device, to update the timing offset to a beam level.

Optionally, the terminal device may further obtain a communication parameter corresponding to a cell in which the terminal device is located, and the communication parameter includes at least one of the following: a reference timing offset at a cell level, and a reference timing offset at each beam level included in the cell. The communication parameter may be configured by the network device for the terminal device. For example, based on the four-step random access mechanism, the network device may configure the communication parameter corresponding to the foregoing cell for the terminal device in any phase after the synchronization signal is broadcast, the message 2 is sent, the message 4 is sent, and the terminal device accesses the network device. For configuration of the communication parameter corresponding to the cell, refer to the implementation in S801. Details are not described again in embodiments of this application.

Based on this, if the communication parameter is recorded in a differential value manner, the fifth information may carry a parameter index for identifying a basic value and a differential value. The basic value may be a reference timing offset at a cell level. For example, assuming that the parameter index "2" in Table 1 identifies the beam level corresponding to the first beam, the network device may add, to the fifth information, that the parameter index of the basic value is "0" and the differential value is "2". In addition, optionally, the foregoing differential value may be a positive value or a negative value, and whether the differential value is a positive value or a negative value may be pre-agreed on by the network device and the terminal device. Alternatively, the network device may use one bit in the fifth information to indicate whether the differential value is a positive value or a negative value. A value of the one bit may be 0 or 1, where when the value is 0, it indicates that the differential value is a positive value, and when the value is 1, it indicates that the differential value is a negative value. Alternatively, when the value of the one bit is 1, it indicates that the differential value is a positive value, and when the value is 0, it indicates that the differential value is a negative value.

Based on this, for a manner of directly recording the communication parameter, the fifth information may carry a parameter index of the beam level corresponding to the first beam. For example, assuming that the parameter index "1" in Table 2 identifies a parameter at the beam level corresponding to the first beam, the fifth information may include the parameter index "1".

This embodiment of this application may be applied to a scenario in which the synchronization signal SSB is covered by a narrow beam. A range smaller than a cell is divided, for example, a beam level, and a reference timing offset at a beam level corresponding to a beam on which the terminal device is located is used as a timing offset of the terminal device. In this way, the communication parameter is more flexibly indicated to the terminal device, thereby reducing a scheduling delay.

### Solution 3:

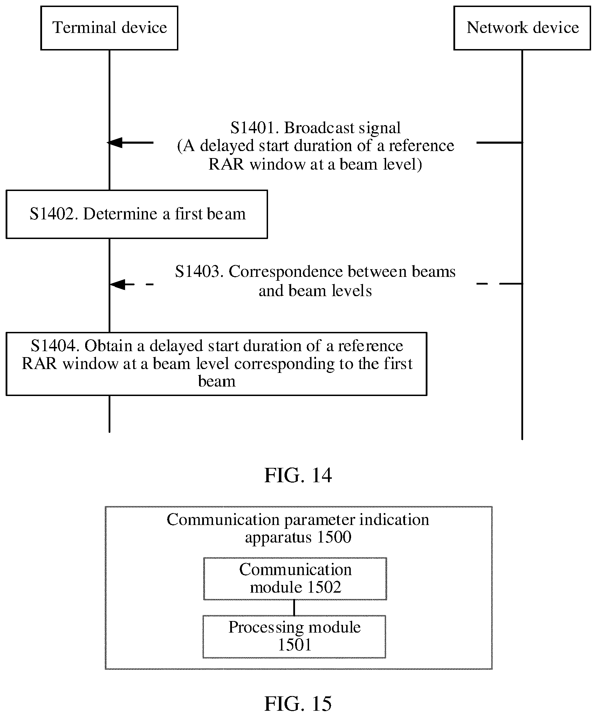

Refer to a communication parameter indication method shown in FIG. 14, the method includes the following procedure.

S 1401. A terminal device obtains a communication parameter corresponding to a cell in which the terminal device is located.

Optionally, the communication parameter corresponding to the cell in which the terminal is located may be configured by a network device or predefined. Specifically, when broadcasting a synchronization signal, the network device may send, in a broadcast manner, the communication parameter corresponding to the cell. For example, the network device delivers a broadcast signal, where the broadcast signal includes the synchronization signal and the communication parameter corresponding to the cell, and the terminal device receives the broadcast signal delivered by the network side, to obtain the communication parameter corresponding to the cell in which the terminal device is located. The communication parameter includes at least one of the following: a delay start duration of a reference random access RAR window at a cell level, and a delay start duration of a reference random access RAR window at each beam level included in the cell. It may be understood that one beam level may correspond to some beams in a cell. The beams may include one or more beams, but a quantity of the included beams is less than or equal to a quantity of all beams in the cell. Each beam may correspond to one or more terminal devices. For example, FIG. 14 shows a manner in which the network device adds a delay start duration of a reference random access RAR window at a beam level to the broadcast synchronization signal.

Optionally, the communication parameter may be recorded in a differential value manner, or the communication parameter may be directly recorded. For example, Table 4 is a list of communication parameters recorded in a differential value manner, and Table 5 shows communication parameters that are directly recorded.

**Table 4**

| Parameter index | Parameter value |
|---|---|
| 0 | 20 |
| 1 | 0 |
| 2 | 2 |
| 3 | 4 |

The parameter index in Table 4 is for identifying a cell level or a beam level. For example, a parameter index "0" shown in Table 4 is for identifying a cell level, and parameter indexes "1", "2", and "3" shown in Table 4 are for identifying beam levels. That is, Table 4 shows a case in which one cell includes three beam levels. However, it may be understood that one cell may alternatively include another quantity of beam levels. One beam level corresponds to one or more beams. Alternatively, in an actual application, one or more rows in Table 4 may be used, or a new row may be added based on Table 4. This is not limited in this embodiment of this application.

The parameter index in each row is associated with or corresponds to one parameter value, and the parameter value is for determining a delay start duration of a reference RAR window at a cell level identified by the parameter index or a delay start duration of a reference RAR window at a beam level identified by the parameter index. A normalized value may be obtained for each parameter value. A unit of the parameter value may be a unit related to a granularity of a scheduled time resource, such as a sampling interval, a slot, a mini-slot, or a sub-slot. This is not limited in this embodiment of this application.

A parameter value corresponding to any parameter index in a plurality of parameter indexes may be used to represent a delay start duration of a reference RAR window corresponding to the parameter index, and the delayed start duration of the reference RAR window is used as a basic value. Parameter values corresponding to other parameter indexes may all be represented by a differential value compared with the foregoing basic value. The differential value may be a positive difference or a negative difference. Specifically, in Table 4, a reference value (20) at a cell level (the parameter index is "0") is used to represent a delay start duration of a reference RAR window at the cell level, and 20 is used as a basic value. Reference values at other beam levels are shown in Table 4 in a form of a differential value. For example, a parameter value corresponding to the parameter index "1" is "0", which indicates that a reference timing offset at the beam level identified by the parameter index "1" is the same as the reference timing offset at the cell level, and both are 20. For another example, a parameter value corresponding to the parameter index "2" is "2", which indicates that a difference between a reference timing offset at the beam level identified by the parameter index "2" and the reference timing offset at the cell level is 2. Whether the difference is plus 2 or minus 2 compared with the reference timing offset at the cell level may be agreed in advance. That is, using Table 4 as an example, the reference timing offset at the beam level identified by the parameter index "2" may be 18 or 22. Specifically, the reference timing offset may be determined depending on whether the reference value is a positive value or a negative value specified in an actual application. Setting the parameter value through a differential value can reduce signaling overheads for indicating the communication parameter.

**Table 5**

| Parameter index | Parameter value |
|---|---|
| 0 | 4 |
| 1 | 5 |
| 2 | 6 |
| 3 | 7 |

The parameter index in Table 5 is for identifying a cell level or a beam level. For example, a parameter index "0" shown in Table 5 is for identifying a cell level, and parameter indexes "1", "2", and "3" shown in Table 5 are for identifying beam levels. That is, Table 5 shows a case in which one cell includes three beam levels. However, it may be understood that one cell may alternatively include another quantity of beam levels, and one beam level corresponds to one or more beams. In an actual application, one or more rows in Table 5 may be used, or a new row may be added based on Table 5. This is not limited in this embodiment of this application. The parameter index in each row is associated with or corresponds to one parameter value, and the parameter value indicates a delay start duration of a reference RAR window at a cell level identified by the parameter index or a delay start duration of a reference RAR window at a beam level identified by the parameter index. A normalized value may be obtained for each parameter value. A unit of the parameter value may be a unit related to a granularity of a scheduled time resource, such as a sampling interval, a slot, a mini-slot, or a sub-slot. This is not limited in this embodiment of this application.

A parameter value corresponding to each parameter index may be used to indicate a delay start duration of a reference RAR window corresponding to the parameter index. For example, in Table 5, a reference value (4) at a cell level (the parameter index is "0") is used to represent a delay start duration of a reference RAR window at the cell level; a reference value (5) at a beam level identified by the parameter index " 1" is used to represent a delay start duration of a reference RAR window at the beam level; a reference value (6) at a beam level identified by the parameter index "2" is used to represent a delay start duration of a reference RAR window at the beam level; and a reference value (7) at a beam level identified by the parameter index "3" is used to represent a delay start duration of a reference RAR window at the beam level.

S1402. Determine a first beam based on a received synchronization signal, where a synchronization signal received by the terminal device based on the first beam has best signal quality.

S 1403. Obtain a correspondence between beams included in a cell in which the terminal device is located and beam levels, to determine a beam level corresponding to the first beam.

Optionally, the correspondence between beams included in the cell in which the terminal device is located and beam levels may be configured by the network device or predefined. It may be understood that S1403 is an optional step, and S1404 may be directly performed without performing S1403 in a case that the correspondence is predefined. Alternatively, S1403 may be performed in a case that the correspondence is configured by the network device. However, it should be noted that, if S1403 is performed, S1403 and S1401 or S402 may be performed simultaneously, and are not performed in sequence.

S 1404. Obtain delayed start duration of a reference random access RAR window at the beam level corresponding to the first beam, where the delayed start duration of the reference RAR window is for determining a delay degree of opening an RAR window by the terminal device.

Optionally, the terminal device may use, based on the correspondence between beams or beam levels and a delayed start duration of a reference RAR window corresponding to each beam in the cell, the delayed start duration of the reference RAR window at the beam level corresponding to the first beam as a delay start duration of a reference RAR window used by the terminal device, that is, set a delay start duration of an RAR window to a beam level.

This embodiment of this application provides a solution for setting a delay start duration of an RAR window to a beam level solution, which is more flexible than a solution of setting a delay start duration of an RAR window to a cell level. Compared with a delay start duration of an RAR window at a cell level, for example, a conventional delayed start duration of an RAR window that is set based on a minimum round-trip transmission delay of a cell, complexity of monitoring a message 2 around a terminal can be reduced.

Based on a same concept, refer to FIG. 15, an embodiment of this application provides a communication parameter indication apparatus 1500. The apparatus 1500 includes a processing module 1501 and a communication module 1502. The apparatus 1500 may be a terminal device, or may be an apparatus applied to a terminal device and can support the terminal device in performing a communication parameter indication method. Alternatively, the apparatus 1500 may be a network device, or may be an apparatus applied to a network device and can support the network device in performing a communication parameter indication method.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, a component that is in the communication module and that is configured to implement a receiving function may be considered as a receiving unit. It should be understood that the communication module is configured to perform a sending operation and a receiving operation on a terminal device side or a network device side in the foregoing method embodiments, and a component that is in the communication module and that is configured to implement a sending function is considered as a sending unit. That is, the communication module includes a receiving unit and a sending unit. When the apparatus 1500 is applied to a terminal device, the receiving unit included in the communication module 1502 is configured to perform a receiving operation on the terminal device side, for example, obtaining first information. Specifically, the receiving unit may be configured to receive first information from a network device. The sending unit included in the communication module 1502 is configured to perform a sending operation on the terminal device side, for example, sending second information. Specifically, the sending unit may be configured to send second information to the network device. When the apparatus 1500 is applied to a network device, the receiving unit included in the communication module 1502 is configured to perform a receiving operation on the network device side, for example, obtaining second information. Specifically, the receiving unit may be configured to receive second information from a terminal device. The sending unit included in the communication module 1502 is configured to perform a sending operation on the network device side, for example, sending first information. Specifically, the sending unit may be configured to send first information to the terminal device. In addition, it should be noted that, if the apparatus is implemented by using a chip/chip circuit, the communication module may be an input/output circuit and/or a communication interface, and perform an input operation (corresponding to the foregoing receiving operation) and an output operation (corresponding to the foregoing sending operation); and the processing module is an integrated processor, a microprocessor, or an integrated circuit.

With reference to Example 1 and Example 2, the following describes in detail an implementation in which the apparatus 1500 is applied to a terminal device or a receiving device.

### Example 1:

First, operations performed by modules of the apparatus 1500 when the apparatus is applied to a terminal device in Example 1 are described in detail.

The communication module 1502 is configured to obtain first information, where the first information requests a first parameter of the terminal device, and the first parameter includes at least one of the following: location information of the terminal device and a parameter related to a timing advance TA, where the parameter related to the TA is determined based on a round-trip transmission delay between a first reference point and the terminal device, or the parameter related to the TA is determined based on a round-trip transmission delay between a network device and the terminal device.

The processing module 1501 is configured to generate second information based on the first information, where the second information indicates the first parameter.

The communication module 1502 is further configured to send the second information.

The communication module 1502 is further configured to obtain third information, where the third information indicates a timing offset, the timing offset is for determining a scheduling delay degree of sending information by the terminal device, and the timing offset is related to at least one of a communication parameter corresponding to a cell in which the terminal device is located and the first parameter.

In a satellite communication scenario, updating a communication parameter by a terminal device helps reduce a scheduling delay. In this embodiment of this application, a communication parameter update manner and content reported by the terminal device are indicated, so that various communication parameter update manners can be compatible, including beam-level, cell-level, and user-level communication parameter updates.

In an optional implementation, the communication module 1502 is further configured to: obtain the communication parameter corresponding to the cell in which the terminal device is located, where the communication parameter includes at least one of the following: a reference timing offset at a cell level, and a reference timing offset at each beam level included in the cell.

In an optional implementation, when a value of the first information is a first value, the timing offset is a reference timing offset at a beam level corresponding to the terminal device; or when a value of the first information is not a first value, the timing offset is determined based on the first parameter. A setting or update manner of the communication parameter is indicated by using different values of the first information, for example, whether the communication parameter is set or updated to a cell level or a user level. This indication manner is relatively simple, and signaling overheads can be reduced.

In an optional implementation, the cell includes one or more beam levels, and the beam level corresponding to the terminal device is determined based on the first parameter. The beam levels are divided for the cell, and the beam level suitable for the terminal device is determined based on the first parameter related to the terminal device. This helps indicate a targeted communication parameter to the terminal device, and is more flexible.

In an optional implementation, when the value of the first information is the first value or a second value, the first parameter includes the location information of the terminal device; or when the value of the first information is a third value, the first parameter includes the parameter related to the TA. Content reported by the terminal device is indicated by using different values of the first information. This indication manner is relatively simple, and signaling overheads can be reduced.

In an optional implementation, the second information includes at least one of the following parameters:
a differential value between a location of the terminal device and a location of a second reference point; and a differential value between the TA and a common timing advance TA_common, where the TA_common is determined based on a round-trip transmission delay between the network device and the first reference point. The terminal device reports content in a differential value manner, so that signaling overheads can be reduced.

First, operations performed by modules of the apparatus 1500 when the apparatus is applied to a network device in Example 1 are described in detail.

The processing module 1501 is configured to generate first information, where the first information requests a first parameter of a terminal device, and the first parameter includes at least one of the following: location information of the terminal device and a parameter related to a timing advance TA, where the parameter related to the TA is determined based on a round-trip transmission delay between a reference point and the terminal device, or the parameter related to the TA is determined based on a round-trip transmission delay between the network device and the terminal device;

The communication module 1502 is configured to send the first information.

The communication module 1502 is further configured to obtain second information, where the second information indicates the first parameter.

The communication module 1502 is further configured to send third information, where the third information indicates a timing offset, the timing offset is for determining a scheduling delay degree of sending information by the terminal device, and the timing offset is related to at least one of a communication parameter corresponding to a cell in which the terminal device is located and the first parameter.

In an optional implementation, the communication module 1502 is further configured to: send the communication parameter corresponding to the cell in which the terminal device is located, where the communication parameter includes at least one of the following: a reference timing offset at a cell level, and a reference timing offset at each beam level included in the cell.

In an optional implementation, when a value of the first information is a first value, the timing offset is a reference timing offset at a beam level corresponding to the terminal device; or when a value of the first information is not a first value, the timing offset is determined based on the first parameter. A setting or update manner of the communication parameter is indicated by using different values of the first information, for example, whether the communication parameter is set or updated to a cell level or a user level. This indication manner is relatively simple, and signaling overheads can be reduced.

In an optional implementation, the cell includes one or more beam levels, and the beam level corresponding to the terminal device is determined based on the first parameter. The beam levels are divided for the cell, and the beam level suitable for the terminal device is determined based on the first parameter related to the terminal device. This helps indicate a targeted communication parameter to the terminal device, and is more flexible.

In an optional implementation, when the value of the first information is the first value or a second value, the first parameter includes the location information of the terminal device; or when the value of the first information is a third value, the first parameter includes the parameter related to the TA. Content reported by the terminal device is indicated by using different values of the first information. This indication manner is relatively simple, and signaling overheads can be reduced.

In an optional implementation, the second information includes at least one of the following parameters:
a differential value between a location of the terminal device and a location of a second reference point; and a differential value between the TA and a common timing advance TA_common, where the TA_common is determined based on a round-trip transmission delay between the network device and the first reference point. The terminal device reports content in a differential value manner, so that signaling overheads can be reduced.

### Example 2:

First, operations performed by modules of the apparatus 1500 when the apparatus is applied to a terminal device in Example 2 are described in detail.

The processing module 1501 is configured to generate fourth information, where the fourth information requests to access a network device.

The communication module 1502 is configured to send the fourth information based on a first beam.

The communication module 1502 is further configured to obtain fifth information, where the fifth information indicates a reference timing offset at a beam level corresponding to the first beam, and the reference timing offset is for determining a scheduling delay degree of sending information by a terminal device.

In a satellite communication scenario, updating a communication parameter by a terminal device helps reduce a scheduling delay. In this embodiment of this application, a beam used by the terminal device to access a network is introduced to update the communication parameter to a beam level, and a communication parameter update manner, that is, the beam level, is indicated by a network side to the terminal device. This is relatively flexible.

In an optional implementation, the communication module 1502 is further configured to: before obtaining the fifth information, obtain a delay start duration of a reference random access RAR window at the beam level corresponding to the first beam, where the delayed start duration of the reference RAR window is for determining a delay degree of opening an RAR window by the terminal device. A delay start duration of an RAR window is set to a beam level. Compared with a delay start duration of an RAR window at a cell level, for example, a conventional delayed start duration of an RAR window that is set based on a minimum round-trip transmission delay of a cell, complexity of monitoring a message 2 around a terminal can be reduced.

In an optional implementation, a cell in which the terminal device is located includes one or more beams, each beam corresponds to one beam level, and the communication module 1502 is further configured to: obtain a correspondence between the beams included in the cell in which the terminal device is located and beam levels, to determine the beam level corresponding to the first beam.

In an optional implementation, the communication module 1502 is further configured to obtain a communication parameter corresponding to the cell in which the terminal device is located, where the communication parameter includes at least one of the following: a reference timing offset at a cell level, a reference timing offset at each beam level included in the cell, a delay start duration of a reference random access RAR window at a cell level, and a delay start duration of a reference random access RAR window at each beam level included in the cell.

In an optional implementation, before sending the fourth information based on the first beam, the communication module 1502 is further configured to: obtain a synchronization signal from the network device, and determine the first beam, where a synchronization signal obtained by the terminal device based on the first beam has best signal quality. A beam corresponding to the best received synchronization signal quality is selected for access, ensuring communication reliability.

In addition, operations performed by modules of the apparatus 1500 when the apparatus is applied to a network device in Example 2 are described in detail.

The communication module 1502 is configured to obtain fourth information sent by a terminal device based on a first beam, where the fourth information requests to access a network device.

The processing module 1501 is configured to generate fifth information, where the fifth information indicates a reference timing offset at a beam level corresponding to the first beam, and the reference timing offset is for determining a scheduling delay degree of sending information by the terminal device.

The communication module 1502 is further configured to send the fifth information.

In a satellite communication scenario, updating a communication parameter by a terminal device helps reduce a scheduling delay. In this embodiment of this application, a beam used by the terminal device to access a network is introduced to update the communication parameter to a beam level, and a communication parameter update manner, that is, the beam level, is indicated by a network side to the terminal device. This is relatively flexible.

In an optional implementation, the communication module 1502 is further configured to: before sending the fifth information, send a delay start duration of a reference random access RAR window at the beam level corresponding to the first beam, where the delayed start duration of the reference RAR window is for determining a delay degree of opening an RAR window by the terminal device. A delay start duration of an RAR window is set to a beam level. Compared with a delay start duration of an RAR window at a cell level, for example, a conventional delayed start duration of an RAR window that is set based on a minimum round-trip transmission delay of a cell, complexity of monitoring a message 2 around a terminal can be reduced.

In an optional implementation, a cell in which the terminal device is located includes one or more beams, each beam corresponds to one beam level, and the communication module 1502 is further configured to send a correspondence between the beams included in the cell in which the terminal device is located and beam levels, to determine the beam level corresponding to the first beam.

In an optional implementation, the communication module 1502 is further configured to send a communication parameter corresponding to the cell in which the terminal device is located, where the communication parameter includes at least one of the following: a reference timing offset at a cell level, a reference timing offset at each beam level included in the cell, a delay start duration of a reference random access RAR window at a cell level, and a delay start duration of a reference random access RAR window at each beam level included in the cell.

In an optional implementation, the communication module 1502 is further configured to: before obtaining the fourth information sent by the terminal device based on the first beam, send a synchronization signal from the network device, and determine the first beam, where a synchronization signal obtained by the terminal device based on the first beam has best signal quality. A beam corresponding to the best received synchronization signal quality is selected for access, ensuring communication reliability.

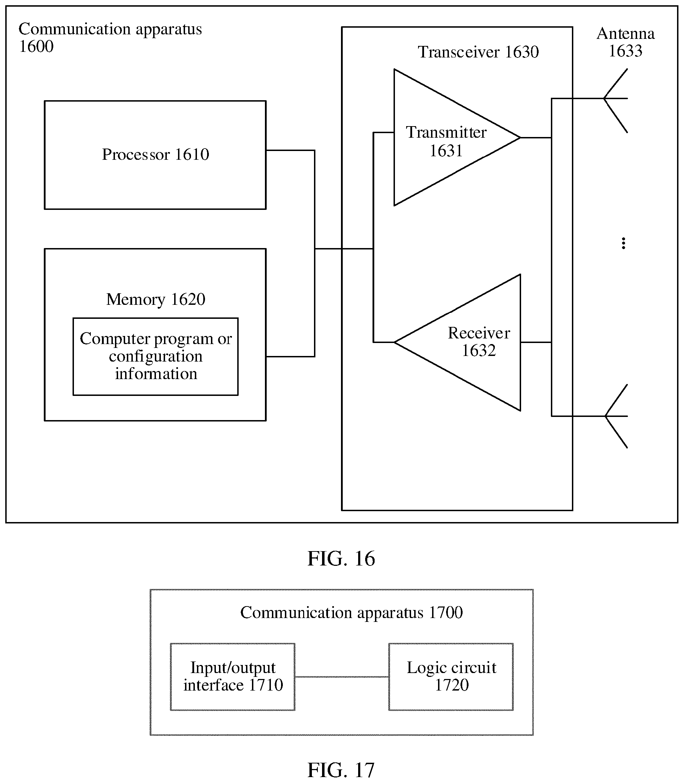

Based on a same concept, as shown in FIG. 16, an embodiment of this application provides a communication apparatus 1600. The communication apparatus 1600 may be a chip or a chip system. Optionally, in this embodiment of this application, the chip system may include a chip, or may include a chip and another discrete component.

The communication apparatus 1600 may include at least one processor 1610. The processor 1610 is coupled to a memory. Optionally, the memory may be located inside the apparatus, or may be located outside the apparatus. For example, the communication apparatus 1600 may further include at least one memory 1620. The memory 1620 stores a necessary computer program, configuration information, a computer program or instructions, and/or data for implementing any one of the foregoing embodiments. The processor 1610 may execute the computer program stored in the memory 1620, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 1610 may cooperate with the memory 1620. A specific connection medium between a transceiver 1630, the processor 1610, and the memory 1620 is not limited in this embodiment of this application.

The communication apparatus 1600 may further include a transceiver 1630, and the communication apparatus 1600 may exchange information with another device by using the transceiver 1630. The transceiver 1630 may be a circuit, a bus, a transceiver, or any other apparatus that can be configured to exchange information, or is referred to as a signal transceiver unit. As shown in FIG. 16, the transceiver 1630 includes a transmitter 1631, a receiver 1632, and an antenna 1633. In addition, when the communication apparatus 1600 is a chip type apparatus or circuit, the transceiver in the communication apparatus 1600 may alternatively be an input/output circuit and/or a communication interface, and may input data (or is referred to as receiving data) and output data (or is referred to as sending data). The processor is an integrated processor, a microprocessor, or an integrated circuit, and the processor may determine output data based on input data.

In a possible implementation, the communication apparatus 1600 may be applied to a terminal device. Specifically, the communication apparatus 1600 may be a terminal device, or may be an apparatus that can support a terminal device in implementing functions of the terminal device in any one of the foregoing embodiments. The memory 1620 stores a necessary computer program, a computer program or instructions, and/or data for implementing functions of the terminal device in any one of the foregoing embodiments. The processor 1610 may execute the computer program stored in the memory 1620, to complete the method performed by the terminal device in any one of the foregoing embodiments. When applied to a terminal device, the transmitter 1631 in the communication apparatus 1600 may be configured to send transmission control configuration information to a network device by using the antenna 1633, and the receiver 1632 may be configured to receive, by using the antenna 1633, transmission information sent by the network device.

In another possible implementation, the communication apparatus 1600 may be applied to a network device. Specifically, the communication apparatus 1600 may be a network device, or may be an apparatus that can support a network device in implementing functions of the network device in any one of the foregoing embodiments. The memory 1620 stores a necessary computer program, a computer program or instructions, and/or data for implementing functions of the network device in any one of the foregoing embodiments. The processor 1610 may execute the computer program stored in the memory 1620, to complete the method performed by the network device in any one of the foregoing embodiments. When applied to a network device, the receiver 1632 in the communication apparatus 1600 may be configured to receive, by using the antenna 1633, transmission control configuration information sent by a terminal device, and the transmitter 1631 may be configured to send transmission information to the terminal device by using the antenna 1633.

The communication apparatus 1600 provided in this embodiment may be applied to a terminal device to complete the method performed by the terminal device, or may be applied to a network device to complete the method performed by the network device. Therefore, for technical effects that can be achieved by this embodiment, refer to the foregoing method embodiments. Details are not described herein again.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware and a software module in the processor.

In embodiments of this application, the memory may be a non-volatile memory such as a hard disk drive (hard disk drive, HDD) or a solid-state drive (solid-state drive, SSD), or may be a volatile memory (volatile memory) such as a random access memory (random access memory, RAM). The memory may alternatively be any other medium that can be configured to carry or store desired program code in a form of an instruction or a data structure and that can be accessed by a computer, but is not limited thereto. The memory in this embodiment of this application may alternatively be a circuit or any other apparatus that can implement a storage function, and is configured to store a computer program, a computer program or instructions, and/or data.

Based on the foregoing embodiments, refer to FIG. 17, an embodiment of this application further provides another communication apparatus 1700, including: an input/output interface 1710 and a logic circuit 1720, where the input/output interface 1710 is configured to receive code instructions and transmit the code instructions to the logic circuit 1720; and the logic circuit 1720 is configured to execute the code instructions to perform the method performed by the terminal device or the method performed by the network device in any one of the foregoing embodiments.

With reference to Example 3 and Example 4, the following describes in detail operations performed by the communication apparatus when the communication apparatus is applied to a terminal device or a communication device.

### Example 3:

In an optional implementation, the communication apparatus 1700 may be applied to a terminal device to perform the method performed by the foregoing terminal device, for example, the method performed by the terminal device in the foregoing Solution 1. The input/output interface 1710 is configured to input first information, where the first information requests a first parameter of the terminal device, and the first parameter includes at least one of the following: location information of the terminal device and a parameter related to a timing advance TA, where the parameter related to the TA is determined based on a round-trip transmission delay between a first reference point and the terminal device, or the parameter related to the TA is determined based on a round-trip transmission delay between a network device and the terminal device. The logic circuit 1720 is configured to generate second information based on the first information, where the second information indicates the first parameter. The input/output interface 1710 is further configured to output the second information. The input/output interface 1710 is further configured to input third information, where the third information indicates a timing offset, the timing offset is for determining a scheduling delay degree of sending information by the terminal device, and the timing offset is related to at least one of a communication parameter corresponding to a cell in which the terminal device is located and the first parameter.

In another optional implementation, the communication apparatus 1700 may be applied to a network device to perform the method performed by the foregoing network device, for example, the method performed by the network device in the foregoing Solution 1. The logic circuit 1720 is configured to generate first information, where the first information requests a first parameter of a terminal device, and the first parameter includes at least one of the following: location information of the terminal device and a parameter related to a timing advance TA, where the parameter related to the TA is determined based on a round-trip transmission delay between a reference point and the terminal device, or the parameter related to the TA is determined based on a round-trip transmission delay between the network device and the terminal device. The input/output interface 1710 is configured to output the first information. The input/output interface 1710 is further configured to input second information, where the second information indicates the first parameter. The input/output interface 1710 is further configured to output third information, where the third information indicates a timing offset, the timing offset is for determining a scheduling delay degree of sending information by the terminal device, and the timing offset is related to at least one of a communication parameter corresponding to a cell in which the terminal device is located and the first parameter.

### Example 4

In an optional implementation, the communication apparatus 1700 may be applied to a terminal device to perform the method performed by the terminal device, for example, the method performed by the terminal device in the foregoing Solution 2 or Solution 3. The logic circuit 1720 is configured to generate fourth information, where the fourth information requests to access a network device. The input/output interface 1710 is configured to output the fourth information based on a first beam. The input/output interface 1710 is further configured to input fifth information, where the fifth information indicate a reference timing offset at a beam level corresponding to the first beam, and the reference timing offset is for determining a scheduling delay degree of sending information by the terminal device.

In another optional implementation, the communication apparatus 1700 may be applied to a network device to perform the method performed by the foregoing network device, for example, the method performed by the network device in the foregoing Solution 2 or Solution 3. The input/output interface 1710 is configured to obtain fourth information sent by a terminal device based on a first beam, where the fourth information requests to access the network device. The logic circuit 1720 is configured to generate fifth information, where the fifth information indicates a reference timing offset at a beam level corresponding to the first beam, and the reference timing offset is for determining a scheduling delay degree of sending information by the terminal device. The input/output interface 1710 is further configured to send the fifth information.

The communication apparatus 1700 provided in this embodiment may be applied to a terminal device to perform the method performed by the terminal device, or may be applied to a network device to perform the method performed by the network device. Therefore, for technical effects that can be achieved by this embodiment, refer to the foregoing method embodiments. Details are not described herein again.

Based on the foregoing embodiments, an embodiment of this application further provides a communication system. The communication system includes at least one communication apparatus applied to a terminal device and at least one communication apparatus applied to a network device. For technical effects that can be achieved by this embodiment, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the terminal device or the method performed by the network device in any one of the foregoing embodiments is implemented. The computer-readable storage medium may include: any medium that can store program code, such as a USB flash drive, a removable hard disk, a read-only memory, a random access memory, a magnetic disk, or an optical disc.

To implement functions of the communication apparatuses in FIG. 16 and FIG. 17, an embodiment of this application further provides a chip, including a processor, configured to support the communication apparatus in implementing functions of a transmit end or a receive end in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a magnetic disk memory, a CD-ROM, and an optical memory) that include computer-usable program code.

This application is described with reference to the flowcharts and/or block diagrams of the method, the device (system), and the computer program product according to the embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

Apparently, a person skilled in the art may make various modifications and variations to embodiments of this application without departing from the scope of embodiments of this application. In this way, this application is intended to cover these modifications and variations provided that the modifications and variations of embodiments of this application fall within the scope of the claims of this application and equivalent technologies thereof.

## Claims

1. A communication parameter indication method, comprising:
obtaining first information, wherein the first information requests a first parameter of a terminal device, and the first parameter comprises at least one of the following: location information of the terminal device and a parameter related to a timing advance TA, wherein the parameter related to the TA is determined based on a round-trip transmission delay between a first reference point and the terminal device, or the parameter related to the TA is determined based on a round-trip transmission delay between a network device and the terminal device;
sending second information based on the first information, wherein the second information indicates the first parameter; and
obtaining third information, wherein the third information indicates a timing offset, the timing offset is for determining a scheduling delay degree of sending information by the terminal device, and the timing offset is related to at least one of a communication parameter corresponding to a cell in which the terminal device is located and the first parameter.

2. The method according to claim 1, wherein the method further comprises:
obtaining the communication parameter corresponding to the cell in which the terminal device is located, wherein the communication parameter comprises at least one of the following: a reference timing offset at a cell level, and a reference timing offset at each beam level comprised in the cell.

3. A communication parameter indication method, comprising:
sending first information, wherein the first information requests a first parameter of a terminal device, and the first parameter comprises at least one of the following: location information of the terminal device and a parameter related to a timing advance TA, wherein the parameter related to the TA is determined based on a round-trip transmission delay between a reference point and the terminal device, or the parameter related to the TA is determined based on a round-trip transmission delay between a network device and the terminal device;
obtaining second information, wherein the second information indicates the first parameter; and
sending third information, wherein the third information indicates a timing offset, the timing offset is for determining a scheduling delay degree of send information by the terminal device, and the timing offset is related to at least one of a communication parameter corresponding to a cell in which the terminal device is located and the first parameter.

4. The method according to claim 3, wherein the method further comprises:
sending the communication parameter corresponding to the cell in which the terminal device is located, wherein the communication parameter comprises at least one of the following: a reference timing offset at a cell level, and a reference timing offset at each beam level comprised in the cell.

5. The method according to claim 2 or 4, wherein when a value of the first information is a first value, the timing offset is a reference timing offset at a beam level corresponding to the terminal device; or when a value of the first information is not a first value, the timing offset is determined based on the first parameter.

6. The method according to claim 2, 4, or 5, wherein the cell comprises one or more beam levels, and the beam level corresponding to the terminal device is determined based on the first parameter.

7. The method according to any one of claims 1 to 6, wherein when the value of the first information is the first value or a second value, the first parameter comprises the location information of the terminal device; or when the value of the first information is a third value, the first parameter comprises the parameter related to the TA.

8. The method according to any one of claims 1 to 7, wherein the second information comprises at least one of the following parameters:
a differential value between a location of the terminal device and a location of a second reference point; and
a differential value between the TA and a common timing advance TA_common, wherein the TA_common is determined based on a round-trip transmission delay between the network device and the first reference point.

9. A communication parameter indication apparatus, comprising:
a communication module, configured to obtain first information, wherein the first information requests a first parameter of a terminal device, and the first parameter comprises at least one of the following: location information of the terminal device and a parameter related to a timing advance TA, wherein the parameter related to the TA is determined based on a round-trip transmission delay between a first reference point and the terminal device, or the parameter related to the TA is determined based on a round-trip transmission delay between a network device and the terminal device;
a processing module, configured to generate second information based on the first information, wherein the second information indicates the first parameter;
the communication module being further configured to send the second information; and
the communication module being further configured to obtain third information, wherein the third information indicates a timing offset, the timing offset is for determining a scheduling delay degree of send information by the terminal device, and the timing offset is related to at least one of a communication parameter corresponding to a cell in which the terminal device is located and the first parameter.

10. The apparatus according to claim 9, wherein the communication module is further configured to:
obtain the communication parameter corresponding to the cell in which the terminal device is located, wherein the communication parameter comprises at least one of the following: a reference timing offset at a cell level, and a reference timing offset at each beam level comprised in the cell.

11. A communication parameter indication apparatus, comprising:
a processing module, configured to generate first information, wherein the first information requests a first parameter of a terminal device, and the first parameter comprises at least one of the following: location information of the terminal device and a parameter related to a timing advance TA, wherein the parameter related to the TA is determined based on a round-trip transmission delay between a reference point and the terminal device, or the parameter related to the TA is determined based on a round-trip transmission delay between a network device and the terminal device;
a communication module, configured to send the first information;
the communication module being further configured to obtain second information, wherein the second information indicates the first parameter; and
the communication module being further configured to send third information, wherein the third information indicates a timing offset, the timing offset is for determining a scheduling delay degree of send information by the terminal device, and the timing offset is related to at least one of a communication parameter corresponding to a cell in which the terminal device is located and the first parameter.

12. The apparatus according to claim 11, wherein the communication module is further configured to:
send the communication parameter corresponding to the cell in which the terminal device is located, wherein the communication parameter comprises at least one of the following: a reference timing offset at a cell level, and a reference timing offset at each beam level comprised in the cell.

13. The apparatus according to claim 10 or 12, wherein when a value of the first information is a first value, the timing offset is a reference timing offset at a beam level corresponding to the terminal device; or when a value of the first information is not a first value, the timing offset is determined based on the first parameter.

14. The apparatus according to claim 10, 12, or 13, wherein the cell comprises one or more beam levels, and the beam level corresponding to the terminal device is determined based on the first parameter.

15. The apparatus according to any one of claims 9 to 14, wherein when the value of the first information is the first value or a second value, the first parameter comprises the location information of the terminal device; or when the value of the first information is a third value, the first parameter comprises the parameter related to the TA.

16. The apparatus according to any one of claims 9 to 15, wherein the second information comprises at least one of the following parameters:
a differential value between a location of the terminal device and a location of a second reference point; and
a differential value between the TA and a common timing advance TA_common, wherein the TA_common is determined based on a round-trip transmission delay between the network device and the first reference point.

17. A communication apparatus, comprising:
a processor, wherein the processor is coupled to a memory, the memory is configured to store a computer program or instructions, and the processor is configured to execute the computer program or instructions, to implement the method according to any one of claims 1 to 8.

18. A communication apparatus, comprising: a logic circuit and an input/output interface, wherein
the input/output interface is configured to input first information, wherein the first information requests a first parameter of a terminal device, and the first parameter comprises at least one of the following: location information of the terminal device and a parameter related to a timing advance TA, wherein the parameter related to the TA is determined based on a round-trip transmission delay between a first reference point and the terminal device, or the parameter related to the TA is determined based on a round-trip transmission delay between a network device and the terminal device;
the logic circuit is configured to generate second information based on the first information, wherein the second information indicates the first parameter;
the input/output interface is further configured to output the second information; and
the input/output interface is further configured to input third information, wherein the third information indicates a timing offset, the timing offset is for determining a scheduling delay degree of send information by the terminal device, and the timing offset is related to at least one of a communication parameter corresponding to a cell in which the terminal device is located and the first parameter.

19. A communication apparatus, comprising: a logic circuit and an input/output interface, wherein
the logic circuit is configured to generate first information, wherein the first information requests a first parameter of a terminal device, and the first parameter comprises at least one of the following: location information of the terminal device and a parameter related to a timing advance TA, wherein the parameter related to the TA is determined based on a round-trip transmission delay between a reference point and the terminal device, or the parameter related to the TA is determined based on a round-trip transmission delay between a network device and the terminal device;
the input/output interface is configured to output the first information;
the input/output interface is further configured to input second information, wherein the second information indicates the first parameter; and
the input/output interface is further configured to output third information, wherein the third information indicates a timing offset, the timing offset is for determining a scheduling delay degree of sending information by the terminal device, and the timing offset is related to at least one of a communication parameter corresponding to a cell in which the terminal device is located and the first parameter.

20. A communication parameter indication method, comprising:
sending fourth information based on a first beam, wherein the fourth information requests to access a network device; and
obtaining fifth information, wherein the fifth information indicates a reference timing offset at a beam level corresponding to the first beam, and the reference timing offset is for determining a scheduling delay degree of sending information by a terminal device.

21. The method according to claim 20, wherein before the obtaining fifth information, the method further comprises:
obtaining a delay start duration of a reference random access RAR window at the beam level corresponding to the first beam, wherein the delayed start duration of the reference RAR window is for determining a delay degree of opening an RAR window by the terminal device.

22. The method according to claim 20 or 21, wherein a cell in which the terminal device is located comprises one or more beams, each beam corresponds to one beam level, and the method further comprises:
obtaining a correspondence between the beams comprised in the cell in which the terminal device is located and beam levels, to determine the beam level corresponding to the first beam.

23. The method according to any one of claims 20 to 22, wherein the method further comprises:
obtaining a communication parameter corresponding to the cell in which the terminal device is located, wherein the communication parameter comprises at least one of the following: a reference timing offset at a cell level, a reference timing offset at each beam level comprised in the cell, a delay start duration of a reference random access RAR window at a cell level, and a delay start duration of a reference random access RAR window at each beam level comprised in the cell.

24. The method according to any one of claims 20 to 23, wherein before the sending fourth information based on a first beam, the method further comprises:
obtaining a synchronization signal from a network device, and determining the first beam, wherein a synchronization signal obtained by the terminal device based on the first beam has best signal quality.

25. A communication parameter indication method, comprising:
obtaining fourth information sent by a terminal device based on a first beam, wherein the fourth information requests to access a network device; and
sending fifth information, wherein the fifth information indicates a reference timing offset at a beam level corresponding to the first beam, and the reference timing offset is for determine a scheduling delay degree of sending information by the terminal device.

26. The method according to claim 25, wherein before the sending fifth information, the method further comprises:
sending a delay start duration of a reference random access RAR window at the beam level corresponding to the first beam, wherein the delayed start duration of the reference RAR window is for determining a delay degree of opening an RAR window by the terminal device.

27. The method according to claim 25 or 26, wherein a cell in which the terminal device is located comprises one or more beams, each beam corresponds to one beam level, and the method further comprises:
sending a correspondence between the beams comprised in the cell in which the terminal device is located and beam levels, to determine the beam level corresponding to the first beam.

28. The method according to any one of claims 25 to 27, wherein the method further comprises:
sending a communication parameter corresponding to the cell in which the terminal device is located, wherein the communication parameter comprises at least one of the following: a reference timing offset at a cell level, a reference timing offset at each beam level comprised in the cell, a delay start duration of a reference random access RAR window at a cell level, and a delay start duration of a reference random access RAR window at each beam level comprised in the cell.

29. The method according to any one of claims 25 to 28, wherein before the obtaining fourth information sent by a terminal device based on a first beam, the method further comprises: sending a synchronization signal.

30. A communication parameter indication apparatus, comprising:
a processing module, configured to generate fourth information, wherein the fourth information requests to access a network device;
a communication module, configured to send the fourth information based on a first beam; and
the communication module being further configured to obtain fifth information, wherein the fifth information indicates a reference timing offset at a beam level corresponding to the first beam, and the reference timing offset is for determining a scheduling delay degree of sending information by a terminal device.

31. The apparatus according to claim 30, wherein the communication module is further configured to: before obtaining the fifth information, obtain a delay start duration of a reference random access RAR window at the beam level corresponding to the first beam, wherein the delayed start duration of the reference RAR window is for determining a delay degree of opening an RAR window by the terminal device.

32. The apparatus according to claim 30 or 31, wherein a cell in which the terminal device is located comprises one or more beams, each beam corresponds to one beam level, and the communication module is further configured to: obtaining a correspondence between the beams comprised in the cell in which the terminal device is located and beam levels, to determine the beam level corresponding to the first beam.

33. The apparatus according to any one of claims 30 to 32, wherein the communication module is further configured to obtain a communication parameter corresponding to the cell in which the terminal device is located, wherein the communication parameter comprises at least one of the following: a reference timing offset at a cell level, a reference timing offset at each beam level comprised in the cell, a delay start duration of a reference random access RAR window at a cell level, and a delay start duration of a reference random access RAR window at each beam level comprised in the cell.

34. The apparatus according to any one of claims 30 to 33, wherein before sending the fourth information based on the first beam, the communication module is further configured to: obtain a synchronization signal from the network device, and determine the first beam, wherein a synchronization signal obtained by the terminal device based on the first beam has best signal quality.

35. A communication parameter indication apparatus, comprising:
a communication module, configured to obtain fourth information sent by a terminal device based on a first beam, wherein the fourth information requests to access a network device;
a processing module, configured to generate fifth information, wherein the fifth information indicates a reference timing offset at a beam level corresponding to the first beam, and the reference timing offset is for determining a scheduling delay degree of sending information by the terminal device; and
the communication module being further configured to send the fifth information.

36. The apparatus according to claim 35, wherein the communication module is further configured to: before sending the fifth information, send a delay start duration of a reference random access RAR window at the beam level corresponding to the first beam, wherein the delayed start duration of the reference RAR window is for determining a delay degree of opening an RAR window by the terminal device.

37. The apparatus according to claim 35 or 36, wherein a cell in which the terminal device is located comprises one or more beams, each beam corresponds to one beam level, and the communication module is further configured to send a correspondence between the beams comprised in the cell in which the terminal device is located and beam levels, to determine the beam level corresponding to the first beam.

38. The apparatus according to any one of claims 35 to 37, wherein the communication module is further configured to send a communication parameter corresponding to the cell in which the terminal device is located, wherein the communication parameter comprises at least one of the following: a reference timing offset at a cell level, a reference timing offset at each beam level comprised in the cell, a delay start duration of a reference random access RAR window at a cell level, and a delay start duration of a reference random access RAR window at each beam level comprised in the cell.

39. The apparatus according to any one of claims 35 to 38, wherein the communication module is further configured to: before obtaining the fourth information sent by the terminal device based on the first beam, send a synchronization signal.

40. A communication apparatus, comprising a logic circuit and an input/output interface, wherein
the logic circuit is configured to generate fourth information, wherein the fourth information requests to access a network device;
the input/output interface is configured to output the fourth information based on a first beam; and
the input/output interface is further configured to input fifth information, wherein the fifth information indicates a reference timing offset at a beam level corresponding to the first beam, and the reference timing offset is for determining a scheduling delay degree of sending information by a terminal device.

41. A communication apparatus, comprising a logic circuit and an input/output interface, wherein
the input/output interface is configured to obtain fourth information sent by a terminal device based on a first beam, wherein the fourth information requests to access a network device;
the logic circuit is configured to generate fifth information, wherein the fifth information indicates a reference timing offset at a beam level corresponding to the first beam, and the reference timing offset is for determining a scheduling delay degree of sending information by the terminal device; and
the input/output interface is further configured to send the fifth information.

42. A communication apparatus, comprising a processor, wherein the processor is coupled to a memory, the memory is configured to store a computer program or instructions, and the processor is configured to execute the computer program or the instructions, to implement the method according to any one of claims 1 to 8, or the method according to any one of claims 20 to 24, or the method according to any one of claims 25 to 29.

43. A communication apparatus, comprising a processor and an interface circuit, wherein the interface circuit is configured to communicate with another apparatus, and the processor is configured to execute a computer program or instructions, to implement the method according to any one of claims 1 to 8, or the method according to any one of claims 20 to 24, or the method according to any one of claims 25 to 29.

44. A communication system, comprising a terminal device configured to perform the method according to any one of claims 1, 2, 5 to 8, and 20 to 24, and a network device configured to perform the method according to any one of claims 3 to 8 and 25 to 29.

45. A computer-readable storage medium, storing a computer program or instructions, wherein when the instructions are run on a computer, the method according to any one of claims 1 to 8 is implemented, or the method according to any one of claims 20 to 24 is implemented, or the method according to any one of claims 25 to 29 is implemented.

46. A computing program product, comprising computer-executable instructions, wherein when the computer-executable instructions are run on a computer, the computer is enabled to perform the method according to any one of claims 1 to 8, or the method according to any one of claims 20 to 24, or the method according to any one of claims 25 to 29.
